# EUROPEAN PATENT SPECIFICATION

(11) **EP 4 459 472 B1**
(45) Date of publication and mention of the grant of the patent: **04.02.2026**
(21) Application number: 24159253.4
(22) Date of filing: 22.02.2024
(51) Int. Cl.: G06F 12/02, G06F 3/06

(54) **STORAGE DEVICE ALLOCATING UNIT ZONE REGIONS, AND METHOD OF OPERATING THE SAME**
SPEICHERVORRICHTUNG ZUR ZUWEISUNG VON EINHEITSZONENREGIONEN UND VERFAHREN ZUM BETRIEB DAVON
DISPOSITIF DE STOCKAGE ATTRIBUANT DES RÉGIONS DE ZONE UNITAIRE ET SON PROCÉDÉ DE FONCTIONNEMENT

(30) Priority: 04.05.2023 KR 20230058676; 15.12.2023 US 202318542119
(43) Date of publication of application: 06.11.2024
(73) Proprietor: Samsung Electronics Co., Ltd., Suwon-si, Gyeonggi-do 16677 (KR)
(72) Inventor: KIM, Suhwan, 16677 Suwon-si (KR); KANG, Eunji, 16677 Suwon-si (KR); KIM, Hyunkoo, 16677 Suwon-si (KR); KIM, Dongki, 16677 Suwon-si (KR); CHOI, Sihoon, 16677 Suwon-si (KR)
(74) Representative: Marks & Clerk LLP

(56) References cited:
- US-A1- 2021 132 827
- US-A1- 2021 263 682

## Description

### TECHNICAL FIELD

The invention relates to a storage device following the zoned namespace (ZNS) standard.

### BACKGROUND

A memory device stores data in response to a write request and outputs data stored therein in response to a read request. For example, the memory device is classified as a volatile memory device, which loses data stored therein when a power is turned off, such as a dynamic random access memory (DRAM) device or a static RAM (SRAM) device, or a non-volatile memory device, which retains data stored therein even when a power is turned off, such as a flash memory device, a phase-change RAM (PRAM), a magnetic RAM (MRAM), or a resistive RAM (RRAM).

In general, the non-volatile memory device may store data depending on a random access. The random access accompanies frequent garbage collection for the entire region, thereby causing a decrease in the lifetime of the storage device.

US 2021/132827 A1 discloses endurance groups (EGs) may be combined with zoned namespaces (ZNSs) to offer greater control of how, where and under what configurations, data is stored to various user-defined sections on a solid state drive (SSD). This exposure of control functionalities to an SSD host provides improved performance to data center and other hyperscale users and their clients. Larger SSDs may be partitioned into groups of zones for better usage by host devices. The groups may comprise, for example, EGs, sets and media units (Mus), each containing a defined number of zones. Hosts may use different EGs to access the device and thereby manage die or channel conflicts in the SSD.

### SUMMARY

The invention is set out in the appended set of claims. The dependent claims set out particular embodiments. Implementations of the present disclosure provide a storage device allocating unit zone regions and a method of operating the same.

According to an implementation, a method of operating a storage device such as a storage device which communicates with a host device includes allocating a plurality of unit zone regions each having a unit zone size, wherein each of the plurality of unit zone regions is mapped to at least one corresponding memory blocks among a plurality of memory blocks in the storage device and wherein each unit zone region of the plurality of unit zone regions supports a sequential write in compliance with a zoned namespace (ZNS) standard, receiving a first request indicating an allocation operation of a first zoned namespace in compliance with the ZNS standard from the host device, determining a first mapping ratio by dividing a first zone size of the first zoned namespace by the unit zone size, based on the first request, and storing the first mapping ratio in a zone metadata table of the storage device.

According to an implementation, a method of operating a storage device which communicates with a host device includes allocating a plurality of unit zone regions each having a corresponding unit zone region (UZR) index value, receiving a request indicating an allocation operation of a first zoned namespace and a second zoned namespace in compliance with a zoned namespace (ZNS) standard, determining a first maximum UZR index value of the first zoned namespace based on the request, wherein the first maximum UZR index value corresponds to a last unit zone region among unit zone regions corresponding to the first zoned namespace from among the plurality of unit zone regions, determining a second maximum UZR index value of the second zoned namespace based on the request, the second maximum UZR index value corresponding to a last unit zone region among unit zone regions corresponding to the second zoned namespace from among the plurality of unit zone regions, and storing the first maximum UZR index value and the second maximum UZR index value in a zone metadata table of the storage device.

According to an implementation, a storage device includes a command manager that receives a first request indicating an allocation operation of a first zoned namespace in compliance with a zoned namespace (ZNS) standard from a host device and generates a second request indicating the allocation operation, a zone manager that allocates a plurality of unit zone regions each having a unit zone size and a corresponding unit zone region (UZR) index value, a zone metadata table, and a non-volatile memory device that includes a plurality of memory blocks corresponding to the plurality of unit zone regions. The zone manager determines a first mapping ratio by dividing a first zone size of the first zoned namespace by the unit zone size, based on the second request, stores the first mapping ratio in the zone metadata table, determines a first maximum UZR index value corresponding to a last unit zone region among unit zone regions, which correspond to the first zoned namespace, from among the plurality of unit zone regions, based on the second request, and stores the first maximum UZR index value in the zone metadata table.

At least some of the above and other features of the invention are set out in the claims.

### BRIEF DESCRIPTION OF THE FIGURES

The above and other advantages and features of the present disclosure will become apparent by describing in detail implementations thereof with reference to the accompanying drawings.
FIG. 1 is a block diagram of an electronic device according to some implementations of the present disclosure.
FIG. 2 is a diagram describing a method of operating an electronic device of FIG. 1, according to some implementations of the present disclosure.
FIG. 3 is a diagram describing how a conventional electronic device manages namespaces.
FIG. 4 is a diagram describing management of namespaces according to some implementations of the present disclosure.
FIG. 5 is a diagram describing states of a zone region according to some implementations of the present disclosure.
FIG. 6 is a diagram describing a sequential write of a zone region according to some implementations of the present disclosure.
FIG. 7 is a diagram describing how a zone region and a unit zone region are mapped, according to some implementations of the present disclosure.
FIG. 8 is a diagram describing how a zone region and a unit zone region are mapped, according to some implementations of the present disclosure.
FIG. 9 is a flowchart describing a method of operating an electronic device according to some implementations of the present disclosure.
FIG. 10 is a diagram describing a reallocation operation of FIG. 9, according to some implementations of the present disclosure.
FIG. 11 is a diagram describing a reallocation operation of FIG. 9, according to some implementations of the present disclosure.
FIG. 12 is a flowchart describing a method of operating a storage device according to some implementations of the present disclosure.
FIG. 13 is a flowchart describing a method of operating a storage device according to some implementations of the present disclosure.
FIG. 14 is a flowchart describing a method of operating a storage device according to some implementations of the present disclosure.

### DETAILED DESCRIPTION

Below, implementations of the present disclosure will be described in detail and clearly to such an extent that one skilled in the art can carry out implementations of the present disclosure easily.

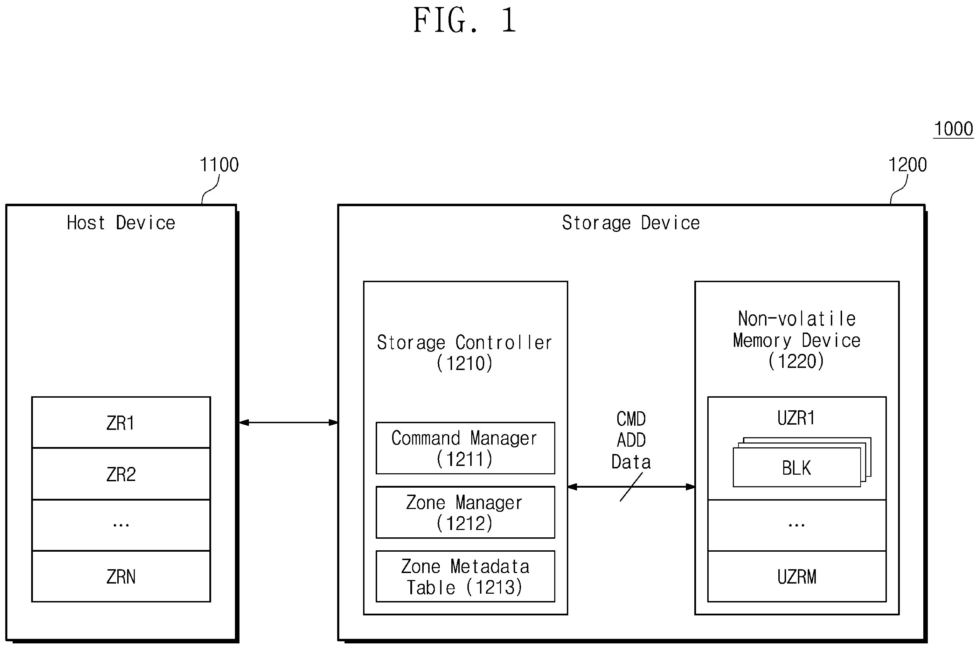

FIG. 1 is a block diagram of an electronic device according to some implementations of the present disclosure. Referring to FIG. 1, an electronic device 1000 includes a host device 1100 and a storage device 1200. The electronic device 1000 may be a computing system, which is configured to process a variety of information, such as a personal computer (PC), a notebook, a laptop, a server, a workstation, a tablet PC, a smartphone, a digital camera, and a black box.

The host device 1100 may control an overall operation of the electronic device 1000. The host device 1100 may include an application, a file system, and a device driver. The application may generate a user request. The file system may generate a system request for generating, changing, or deleting a file based on the user request. Based on the system request, the device driver may store data in the storage device 1200, may read data stored in the storage device 1200, or may manage data stored in the storage device 1200. The device driver may support the zoned namespace (ZNS) standard of the NVMe (Non-volatile memory express).

The ZNS standard may be a protocol supporting a sequential write in a zone region ZR. A conventional non-volatile memory device may store data depending on a random access. For example, data corresponding to sequential logical block addresses may be stored in memory cells or memory blocks that are not physically sequential. The random access accompanies frequent garbage collection for the entire region, thereby causing a decrease in the lifetime of the storage device 1200.

To prevent the above issue, memory blocks of a non-volatile memory device may be partitioned into zone regions, and data may be sequentially stored in the zone regions or in a sub-component (e.g., a unit zone region) of the zone regions To sequentially store data may mean to store data corresponding to the sequential logical block addresses at sequential physical block addresses.

The host device 1100 may manage the plurality of zone regions ZR1 to ZRN. Herein, N is an arbitrary natural number. The zone region may be also referred to as a "host zone region" capable of being identified by the host device 1100. The zone region may correspond to logically sequential logical block addresses. The zone region may be a sub-component of a namespace (e.g., a zoned namespace (ZNS)). To prevent the collision of objects having the same name, the namespace may be a logical region that stores a mapping relationship between an object and an identifier belonging thereto (e.g., in a relevant namespace).

The storage device 1200 may store data under control of the host device 1100. The storage device 1200 may support the ZNS standard of the NVMe. The storage device 1200 may support a unit zone region (UZR) whose size is smaller than the size of the zone region of the host device 1100. For example, the storage device 1200 may allocate a plurality of unit zone regions UZR1 to UZRM. Herein, M is an arbitrary natural number.

Each of the plurality of unit zone regions UZR1 to UZRM may be mapped to at least one memory block BLK. The unit zone region may conceptually refer to some of memory blocks BLK of a non-volatile memory device 1220. In the unit zone region, data corresponding to sequential logical block addresses may be stored in sequential memory blocks or in sequential physical pages of a memory block. That is, the unit zone region may support the sequential write complying with the ZNS standard. The storage device 1200 may manage a mapping relationship between a zone region and a unit zone region. The host device 1100 may identify a zone region, but it may be difficult to identify a unit zone region.

Each of the plurality of unit zone regions UZR1 to UZRM may have a unit zone size. The unit zone size may refer to the size of a physical space corresponding to one unit zone region. For example, the unit zone size may refer to the number of memory blocks BLK corresponding to one unit zone region or the number of physical pages corresponding to one unit zone region (e.g., the number of sub-components of the memory block BLK).

In some implementations, the unit zone size corresponds to one memory block, the first number of memory blocks according to the operating policy of the storage device 1200, or the second number of memory blocks determined by the host device 1100.

Each of the plurality of unit zone regions UZR1 to UZRM may have a corresponding UZR index value. The UZR index value may be used to identify a corresponding unit zone region among the plurality of unit zone regions UZR1 to UZRM. Each of the plurality of unit zone regions UZR1 to UZRM may have a unique UZR index value.

The storage device 1200 may include a storage controller 1210 and the non-volatile memory device 1220. Under control of the host device 1100 or depending on an internal policy, the storage controller 1210 may store data in the non-volatile memory device 1220 or may read data stored in the non-volatile memory device 1220. For example, based on a command CMD indicating an operation to be performed and an address ADD indicating a location of data, the storage controller 1210 may store data in the non-volatile memory device 1220 or may read data stored in the non-volatile memory device 1220.

The storage controller 1210 may include a command manager 1211, a zone manager 1212, and a zone metadata table 1213. In response to a command received from the host device 1100, the command manager 1211 may perform an operation corresponding to the request or may control the zone manager 1212.

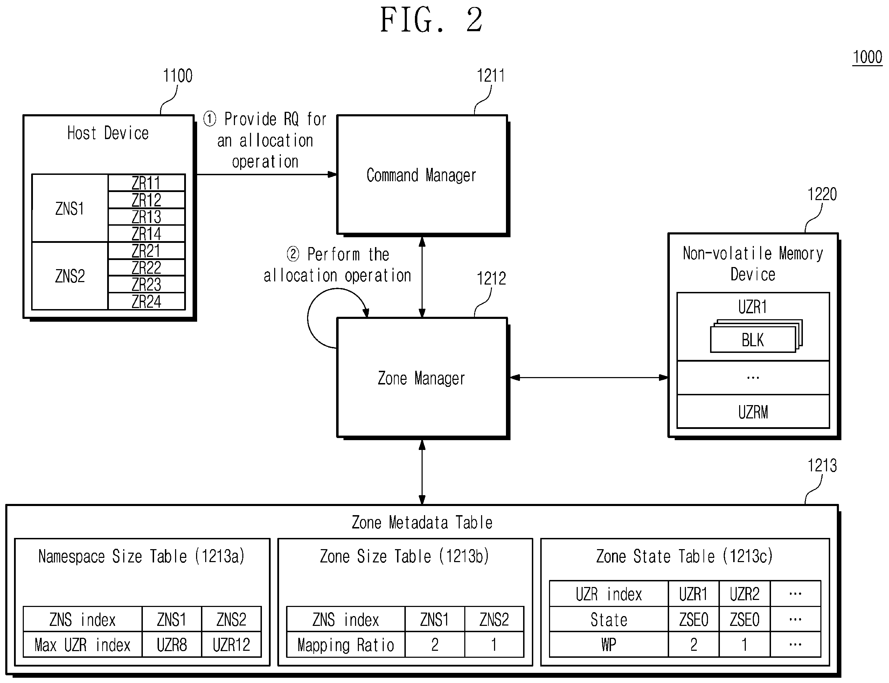

The zone manager 1212 may allocate the plurality of unit zone regions UZR1 to UZRM. The zone manager 1212 may manage a mapping relationship between the zone regions ZR1 to ZRN and the unit zone regions UZR1 to UZRM. The zone manager 1212 may generate metadata of the zone regions ZR1 to ZRN and the unit zone regions UZR1 to UZRM. The zone manager 1212 may store the metadata in the zone metadata table 1213. The metadata may include a size of a namespace (e.g., the size of the zoned namespace) clearly stated by the host device 1100, a size of a zone region, a state of a unit zone region, a write pointer WP of a unit zone region, etc. The metadata will be described in detail with reference to FIG. 2.

The zone metadata table 1213 stores the metadata under control of the zone manager 1212.

In some implementations, the command manager 1211, the zone manager 1212, and the zone metadata table 1213 are implemented by firmware. For example, the storage controller 1210 may include a processor and a volatile memory device. The non-volatile memory device 1220 may store instructions corresponding to a module implemented by firmware. The processor may load the instructions stored in the non-volatile memory device 1220 to the volatile memory device. The processor may execute the instructions loaded to the volatile memory device to allow the storage device 1200 to perform functions of the module.

The non-volatile memory device 1220 may store data under control of the storage controller 1210. The non-volatile memory device 1220 may include the memory blocks BLK corresponding to the plurality of unit zone regions UZR1 to UZRM. The memory block BLK may include a plurality of memory cells. The memory cells may store data.

In some implementations, the non-volatile memory device 1220 is a NAND flash memory, but the present disclosure is not limited thereto. The non-volatile memory devices 1220 may be implemented with one of various storage devices, which retain data stored therein even though a power is turned off, such as a phase-change random access memory (PRAM), a magnetic random access memory (MRAM), a resistive random access memory (RRAM), and a ferroelectric random access memory (FRAM).

FIG. 2 is a diagram describing a method of operating an electronic device of FIG. 1, according to some implementations of the present disclosure. Referring to FIGS. 1 and 2, the electronic device 1000 includes the host device 1100, the command manager 1211, the zone manager 1212, the zone metadata table 1213, and the non-volatile memory device 1220.

The host device 1100 may support a multi-ZNS environment. The multi-ZNS environment may refer to an environment where at least two different zoned namespaces are supported. For example, the host device 1100 may manage a first zoned namespace ZNS1 and a second zoned namespace ZNS2. The entire size of the namespace, the size of the zone region being a sub-component, etc. may be differently set for each namespace. The first zoned namespace ZNS1 may include zone regions ZR11 to ZR14. The zone regions ZR11 to ZR14 may be logically sequential. The zone region ZR11 may be referred to as a "first zone region" of the first zoned namespace ZNS1. The zone region ZR14 may be referred to as a "last zone region" of the first zoned namespace ZNS1. The second zoned namespace ZNS2 may include zone regions ZR21 to ZR24. The zone regions ZR21 to ZR24 may be logically sequential. The zone region ZR21 may be referred to as a "first zone region" of the second zoned namespace ZNS2. The zone region ZR24 may be referred to as a "last zone region" of the second zoned namespace ZNS2. The zone region ZR14, being the last zone region from among the zone regions ZR11 to ZR14 of the first zoned namespace ZNS1, and the zone region ZR21, being the first zone region from among the zone regions ZR21 to ZR24 of the second zoned namespace ZNS2, may be logically sequential.

For better understanding of the present disclosure, 2 namespaces and 8 regions are illustrated, but the present disclosure is not limited thereto. The number of namespaces that the host device 1100 supports may increase or decrease, and the number of regions in any one or more of the namespaces may increase or decrease.

The zone metadata table 1213 may include a namespace size table 1213a, a zone size table 1213b, and a zone state table 1213c. The metadata may include a maximum UZR index value of a zoned namespace, a mapping ratio of a zoned namespace, a state of a unit zone region, a write pointer of a unit zone region, etc.

The namespace size table 1213a may store metadata on the entire size of the zoned namespace. The namespace size table 1213a may store sets of a ZNS index value and a maximum UZR index value. The ZNS index value may be a unique value for identifying a zoned namespace corresponding to the ZNS index value from among a plurality of zoned namespaces that are managed by the host device 1100. The maximum UZR index value may be an UZR index value of the last unit zone region (or a unit zone region having the greatest logical number) among unit zone regions mapped to the corresponding zoned namespace. The maximum UZR index value may be used to identify the entire size of the zoned namespace. The entire size of the zoned namespace may correspond to the maximum UZR index value or may correspond to a difference between the maximum UZR index value and the maximum UZR index value of a previous zoned namespace.

The zone size table 1213b may store the metadata on the entire size of the zone regions of the zoned namespace. The zone size may indicate a logical size of the zone regions included in the zoned namespace. The zone size may be determined relatively in the relationship with the unit zone region and may correspond to a mapping ratio. The zone size table 1213b may store sets of a ZNS index value and a mapping ratio. The mapping ratio may be a value that is obtained by dividing the size of the zone region of the relevant zoned namespace by the size of the unit zone region. For example, when the mapping ratio is 2, the size of the zone region may be two times the size of the unit zone region. As another example, when the mapping ratio is 1, the size of the zone region may be identical to the size of the unit zone region.

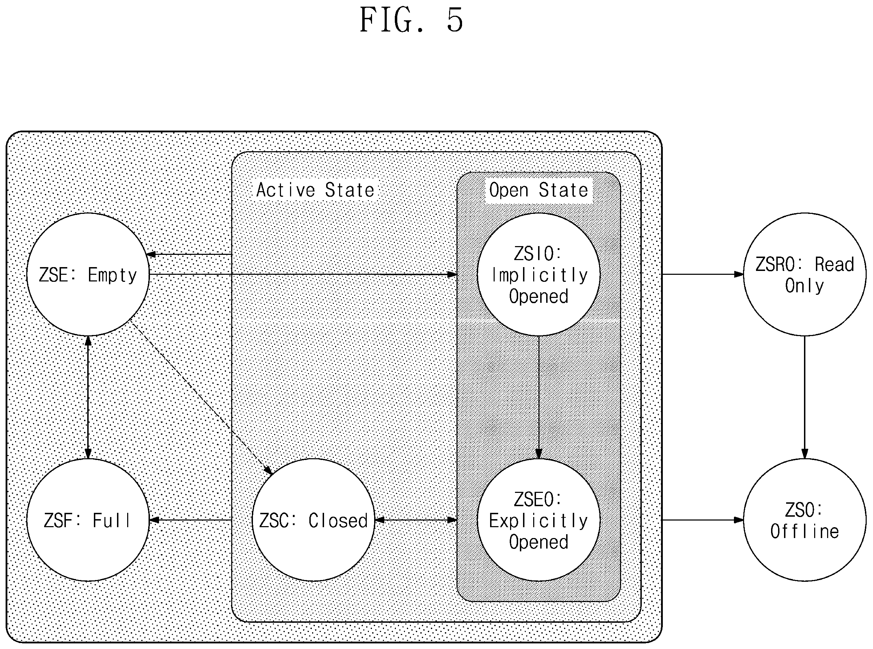

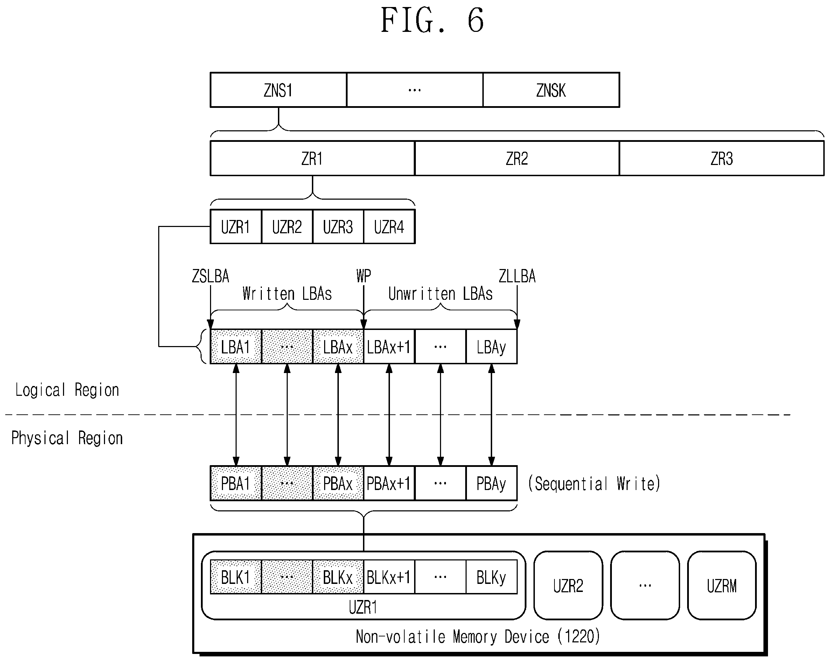

The zone state table 1213c may store the metadata on a state and a write pointer of each unit zone region, which comply with the ZNS standard. The state may mean a zone state of the unit zone region in compliance with the ZNS standard. Examples of the zone state will be described in detail with reference to FIG. 5. The write pointer may point out the last logical block address among written logical block addresses of the zone region and may indicate a location where a next write operation starts. The write pointer will be described in detail with reference to FIG. 6. The zone state table 1213c may store sets of an UZR index value, a state, and a write pointer.

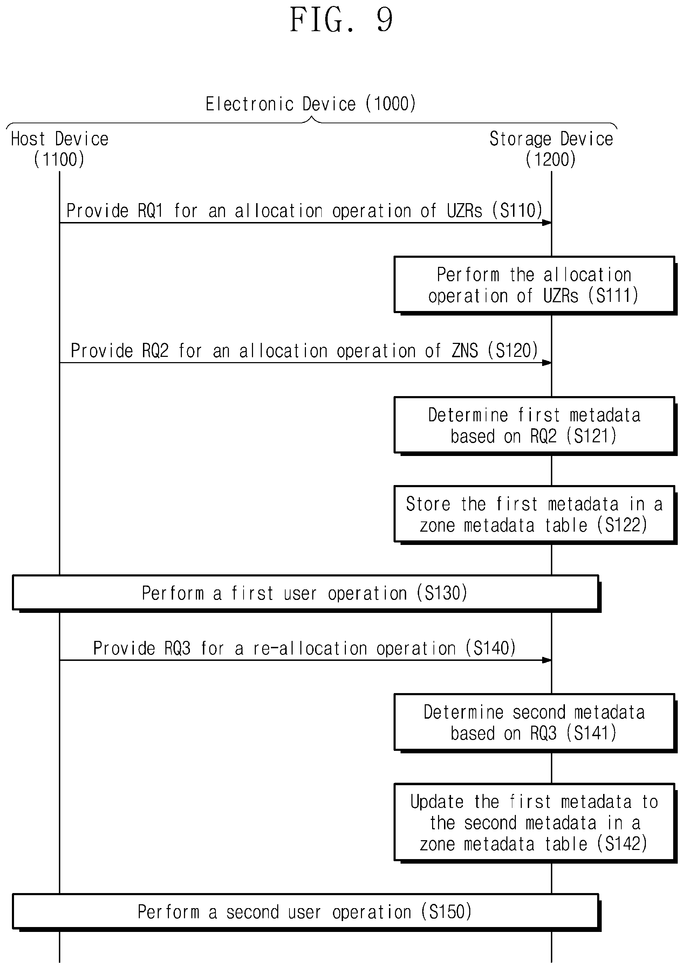

The metadata of the zone state table 1213c may be updated based on a subsequent user operation (e.g., a state transition operation, a read operation, a write operation, or a metadata read operation) after the allocation operation. The user operation will be described in detail with reference to FIG. 9.

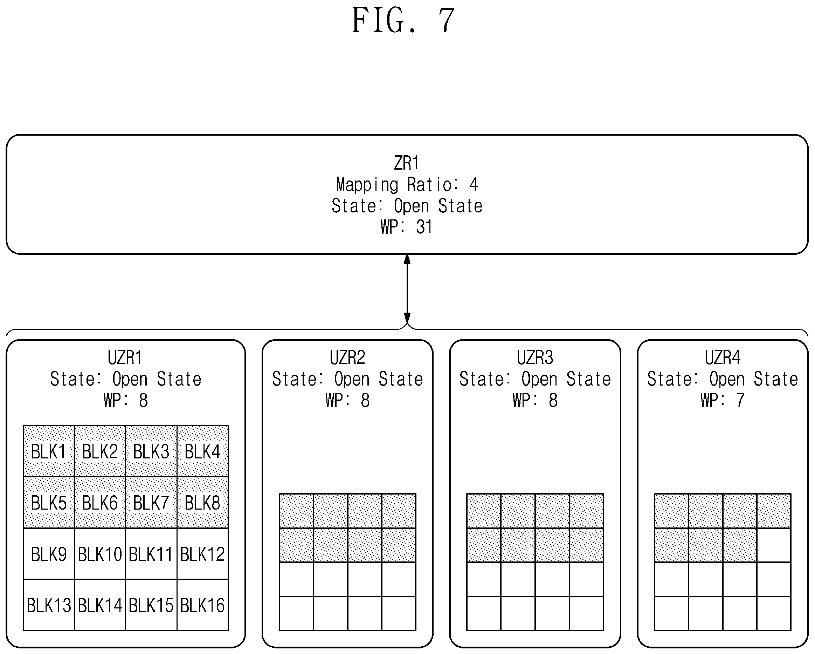

In some implementations, the metadata of the unit zone regions stored in the zone state table 1213c is used to determine the metadata of the zone region. For example, the zone region ZR11 of the first zoned namespace ZNS1 may correspond to the unit zone region UZR1 and the unit zone region UZR2. A state of the zone region ZR11 may be determined based on a state of the unit zone region UZR1 and a state of the unit zone region UZR2. A write pointer of the zone region ZR11 may correspond to a sum of a write pointer of the unit zone region UZR1 and a write pointer of the unit zone region UZR2. How to collect the metadata will be described in detail with reference to FIGS. 7, 8, and 14.

The non-volatile memory device 1220 may include the plurality of memory blocks BLK. The plurality of memory blocks BLK may correspond to the plurality of unit zone regions UZR1 to UZRM. Some of the plurality of unit zone regions UZR1 to UZRM may have the mapping relationship with the zone regions ZR11 to ZR14 of the first zoned namespace ZNS1. The others of the plurality of unit zone regions UZR1 to UZRM may have the mapping relationship with the zone regions ZR21 to ZR24 of the second zoned namespace ZNS2. Each of the plurality of unit zone regions UZR1 to UZRM may have the unit zone size. Each of the plurality of unit zone regions UZR1 to UZRM may have the UZR index value.

Below, a method of operating the electronic device 1000 of the present disclosure will be described.

In a first operation ①, the host device 1100 may provide a request RQ for the allocation operation to the command manager 1211. The allocation operation may include the allocation operation of the first zoned namespace ZNS1 and the allocation operation of the second zoned namespace ZNS2 in compliance with the ZNS standard. The request RQ may include information about a first zone size of the first zoned namespace ZNS1 and information about a second zone size of the second zoned namespace ZNS2. The command manager 1211 may provide a request for zone management to the zone manager 1212, based on the request RQ.

In a second operation ②, the zone manager 1212 may perform the allocation operation, based on the request from the command manager 1211. The allocation operation may refer to an operation of generating metadata corresponding to a mapping relationship between zone regions and unit zone regions and storing the metadata in the zone metadata table 1213. The size of the unit zone region or the size of the zone region may be set by updating only the metadata on the mapping relationship between zone regions and unit zone regions without the allocation, deallocation, or reallocation operation associated with the unit zone regions and the memory blocks BLK. As the allocation, deallocation, or reallocation operation of the memory block BLK is actually omitted, resource consumption, power consumption, and a processing time may be reduced.

For example, the zone manager 1212 determines a first mapping ratio by dividing the first zone size of the first zoned namespace ZNS1 by the unit zone size. The zone region of the first zoned namespace ZNS1 may correspond to two unit zone regions. The first mapping ratio may be 2. The zone manager 1212 may store the first mapping ratio of the first zoned namespace ZNS1 in the zone size table 1213b.

As in the above description, the zone manager 1212 may determine a second mapping ratio by dividing the second zone size of the second zoned namespace ZNS2 by the unit zone size. The zone region of the second zoned namespace ZNS2 may correspond to one unit zone region. The second mapping ratio may be 1. The zone manager 1212 may store the second mapping ratio of the second zoned namespace ZNS2 in the zone size table 1213b.

As another example, the zone manager 1212 may determine a first maximum UZR index value of the first zoned namespace ZNS1, based on the request from the command manager 1211. The first zoned namespace ZNS1 may include 4 zone regions ZR11 to ZR14. The first mapping ratio may be 2. The first zoned namespace ZNS1 may correspond to 8 unit zone regions UZR1 to UZR8. The first maximum UZR index value may correspond to UZR8 being the last unit zone region among the unit zone regions UZR1 to UZR8 corresponding to the first zoned namespace ZNS1 from among the plurality of unit zone regions UZR1 to UZRM. The zone manager 1212 may store the first maximum UZR index value in the namespace size table 1213a.

As in the above description, the zone manager 1212 may determine a second maximum UZR index value of the second zoned namespace ZNS2, based on the request from the command manager 1211. The first maximum UZR index value of the first zoned namespace ZNS1 being an immediately previous zoned namespace may correspond to UZR8. The second zoned namespace ZNS2 may include 4 zone regions ZR21 to ZR24. The second mapping ratio may be 1. The second zoned namespace ZNS2 may correspond to 4 unit zone regions UZR9 to UZR12. The second maximum UZR index value may correspond to UZR12 being the last unit zone region among the unit zone regions UZR9 to UZR12 corresponding to the second zoned namespace ZNS2 from among the plurality of unit zone regions UZR1 to UZRM. The zone manager 1212 may store the second maximum UZR index value in the namespace size table 1213a.

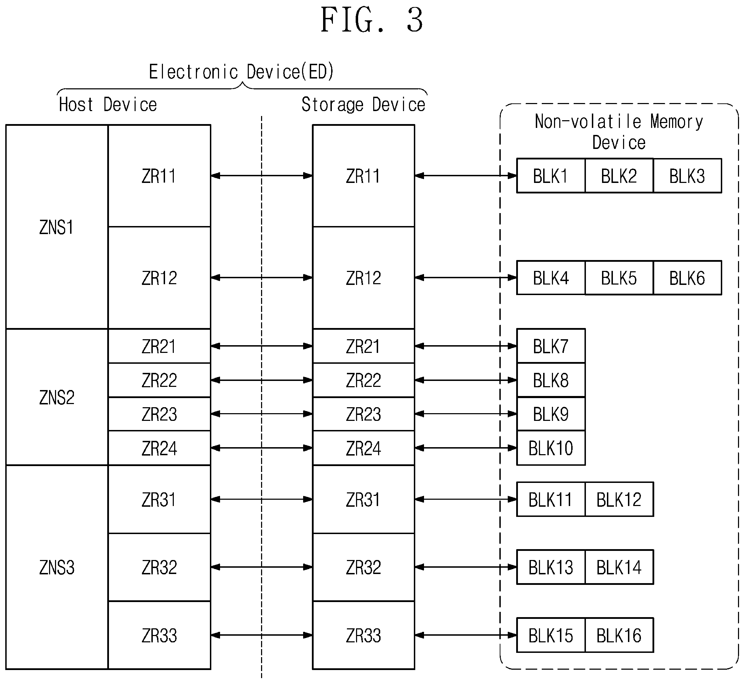

FIG. 3 is a diagram describing how a conventional electronic device manages namespaces. Referring to FIG. 3, a conventional electronic device ED includes a host device and a storage device. The storage device may include a non-volatile memory device. The non-volatile memory device may include memory blocks BLK1 to BLK16.

The host device may manage first to third zoned namespaces ZNS1 to ZNS3. The first zoned namespace ZNS1 may include zone regions ZR11 and ZR12. The zone region ZR11 may be mapped to the memory blocks BLK1, BLK2, and BLK3 that are sequential. The memory block BLK1 may be directly mapped to the zone region ZR11. The memory block BLK2 may be sequential to the memory block BLK1. The memory block BLK3 may be sequential to the memory block BLK2. As in the above description, the zone region ZR12 may be mapped to the memory blocks BLK4, BLK5, and BLK6 that are sequential.

The second zoned namespace ZNS2 may include zone regions ZR21, ZR22, ZR23, and ZR24. The zone region ZR21 may be mapped to the memory block BLK7. The zone region ZR22 may be mapped to the memory block BLK8. The zone region ZR23 may be mapped to the memory block BLK9. The zone region ZR24 may be mapped to the memory block BLK10.

The third zoned namespace ZNS3 may include zone regions ZR31, ZR32, and ZR33. The zone region ZR31 may be mapped to the memory blocks BLK11 and BLK12 that are sequential. The zone region ZR32 may be mapped to the memory blocks BLK13 and BLK14 that are sequential. The zone region ZR33 may be mapped to the memory blocks BLK15 and BLK16 that are sequential.

As described above, the conventional electronic device ED may directly map zone regions of the host device to memory blocks. In the conventional electronic device ED, the change of mapping relationships associated with all the memory blocks of the non-volatile memory device may be required whenever the size of the zoned namespace or the zone region or the number of zoned namespaces or zone regions are changed; in this case, a memory access (e.g., for generating or changing a link relationship of memory blocks) may increase in amount.

In addition, when the zone size of the zone region is differently set for each zoned namespace, the number of memory blocks mapped to a zone region of each zoned namespace may be variously determined. In this case, a mapping relationship may be complicated.

Also, when there occurs an exceptional situation where one zone region is mapped to memory blocks, the number of which is more than an intended value, a garbage collection (GC) target may be determined by sequentially retrieving linked memory blocks; in this case, the burden on retrieving a physical link relationship may increase.

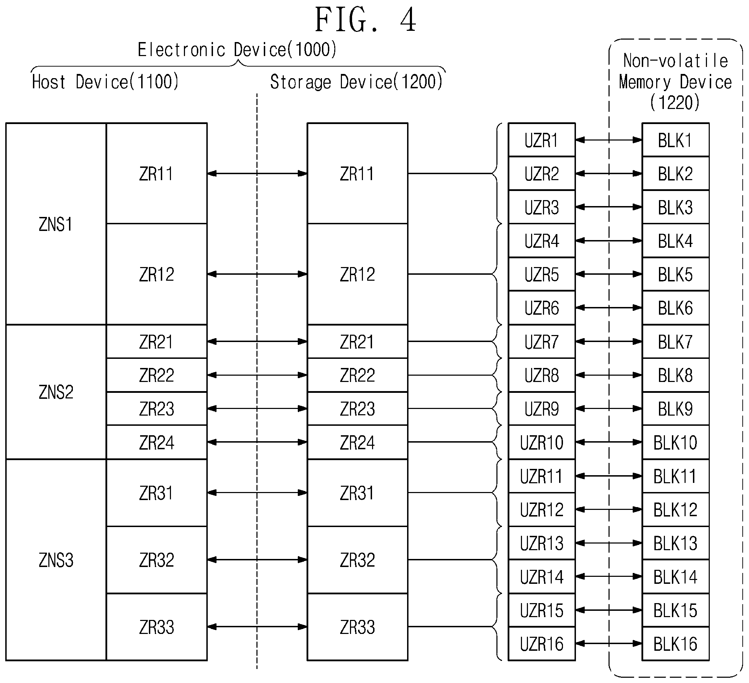

FIG. 4 is a diagram describing management of namespaces according to some implementations of the present disclosure. Referring to FIG. 4, the electronic device 1000 includes the host device 1100 and the storage device 1200. The storage device 1200 may include the non-volatile memory device 1220. The non-volatile memory device 1220 may include the memory blocks BLK1 to BLK16. The storage device 1200 may allocate unit zone regions UZR1 to UZR16 to the memory blocks BLK1 to BLK16, respectively. For better understanding of the present disclosure, the description will be given as one unit zone region is allocated to one memory block. However, the present disclosure is not limited thereto. For example, one unit zone region may be allocated to a plurality of memory blocks.

The host device 1100 may manage the first to third zoned namespaces ZNS1 to ZNS3. The first zoned namespace ZNS1 may include zone regions ZR11 and ZR12. The zone region ZR11 may be mapped to the unit zone regions UZR1, UZR2, and UZR3. To generate a mapping relationship between the zone region ZR11 and the unit zone regions UZR1, UZR2, and UZR3 may mean to generate the metadata of the zone region ZR11 and the unit zone regions UZR1, UZR2, and UZR3. Even though the unit zone regions UZR1, UZR2, and UZR3 are newly mapped to the zone region ZR11, mapping relationships between the unit zone regions UZR1, UZR2, and UZR3 and the memory blocks BLK1 to BLK3 may be maintained without modification. As in the above description, the zone region ZR12 may be mapped to the unit zone regions UZR4, UZR5, and UZR6.

The storage device 1200 may manage the entire size of the first zoned namespace ZNS1, the number of zone regions of the first zoned namespace ZNS1, and the zone size of zone regions of the first zoned namespace ZNS1, based on the metadata. For example, the metadata may include a maximum UZR index value corresponding to the last unit zone region (e.g., UZR6) among unit zone regions corresponding to the first zoned namespace ZNS1. The storage device 1200 may identify the entire size of the zoned namespace, based on the maximum UZR index value. The metadata may include a ZR-UZR mapping ratio (e.g., 3) of the first zoned namespace ZNS1. The storage device 1200 may identify the zone size of the zone regions, based on the mapping ratio. The storage device 1200 may identify the number of zone regions in a zoned namespace, based on the mapping ratio and the maximum UZR index value.

The second zoned namespace ZNS2 may include zone regions ZR21, ZR22, ZR23, and ZR24. The zone region ZR21 may be mapped to the unit zone region UZR7. The zone region ZR22 may be mapped to the unit zone region UZR8. The zone region ZR23 may be mapped to the unit zone region UZR9. The zone region ZR24 may be mapped to the unit zone region UZR10.

The third zoned namespace ZNS3 may include zone regions ZR31, ZR32, and ZR33. The zone region ZR31 may be mapped to the unit zone regions UZR11 and UZR12. The zone region ZR32 may be mapped to the unit zone regions UZR13 and UZR14. The zone region ZR33 may be mapped to the unit zone regions UZR15 and UZR16.

As described above, the electronic device 1000 may in advance allocate unit zone regions before allocating zone regions of a zoned namespace. In the electronic device 1000, even though the size of the zoned namespace or the zone region or the number of zoned namespaces or zone regions are changed, a mapping relationship between a unit zone region and a memory block may not be changed, and thus, a memory access (e.g., for generating or changing a link relationship of memory blocks) may not be required. Accordingly, the electronic device 1000 capable of dynamically changing the size of the zoned namespace or the zone region or the number of zoned namespaces or zone regions may be provided.

In addition, when the zone size of the zone region is differently set for each zoned namespace, the electronic device 1000 may manage a mapping ratio for each zoned namespace. With reference to the mapping ratio, the electronic device 1000 may easily manage zoned namespaces whose sizes are different.

Also, when there occurs an exceptional situation where one zone region is mapped to memory blocks, the number of which is more than an intended value, a garbage collection (GC) target may be determined with reference to mapping information of a unit zone region and a memory block. For example, when a unit zone region is mapped to one memory block, the electronic device 1000 may easily determine a garbage collection (GC) target by identifying a unit zone region mapped to two or more memory blocks. Accordingly, the burden on retrieving a physical link relationship with a memory block may decrease.

FIG. 5 is a diagram describing states of a zone region according to some implementations of the present disclosure. Referring to FIGS. 1 and 5, states illustrated in FIG. 5 are states that each of the zone regions ZR1 to ZRN of FIG. 1 is capable of having or are states that each of the unit zone regions UZR1 to UZRM of FIG. 1 is capable of having.

According to some implementations of the present disclosure, the zone regions and the unit zone regions that are managed by the electronic device 1000 have one of a ZSE state, a ZSIO state, a ZSEO state, a ZSC state, a ZSF state, a ZSRO state, and a ZSO state. As the storage device 1200 processes a request received from the host device 1100, states of the zone regions and the unit zone regions may transition.

The ZSE state, the ZSF state, the ZSRO state, and the ZSO state may be classified as non-active states. The ZSIO state, the ZSEO state, and the ZSC state may be classified as active states. The ZSIO state and the ZSEO state may be classified as open states.

The ZSE state may indicate an empty state. In the ZSE state, physical memory blocks may not yet store data, and the write pointer may point out the lowest logical block address (e.g., a logical block address LBA having the smallest number from among logical block addresses corresponding to a zone region or a unit zone region). The write pointer of the ZSE state may be valid. The ZSE state may transition to one of the ZSIO state, the ZSEO state, the ZSC state, and the ZSF state.

The ZSIO state may indicate an implicitly opened state. The ZSIO state may be a state implicitly opened by executing a write command received from the host device 1100. In the ZSIO state, a physical memory block may store data corresponding to the write command. The ZSIO state may transition to one of the ZSE state, the ZSEO state, the ZSC state, and the ZSF state. When an open resource is saturated, the ZSIO state may transition to the ZSC state even though there is no close command.

The ZSEO state may indicate an explicitly opened state. The ZSEO state may be a state explicitly opened by executing an open command from the host device 1100. In the ZSEO state, a physical memory block may receive a write command subsequently and may then store data corresponding to the write command. The ZSEO state may transition to one of the ZSE state, the ZSC state, and the ZSF state. The ZSEO state may have a higher priority to an open resource than the ZSIO state. The ZSEO state may transition to the ZSC state only by the close command.

The ZSC state may indicate a closed state. The zone region or the unit zone region may enter the ZSC state 1) when, in the ZSE state, usable active resources are present and a set zone descriptor extension command is received, 2) when, in the ZSIO state, the close command is received or an open resource is saturated, or 3) when, in the ZSEO state, the close command is received. In the ZSC state, a physical memory block may not store data corresponding to a write command. The ZSC state may transition to one of the ZSE state, the ZSIO state, the ZSEO state, and the ZSF state.

The ZSF state may indicate a full state. In the ZSF state, physical memory blocks may be full by the stored data, and the write pointer may point out the highest logical block address (e.g., a logical block address LBA having the greatest number from among logical block addresses corresponding to a zone region or a unit zone region). The write pointer of the ZSF state may be invalid. The ZSF state may transition to the ZSE state by a reset zone command.

The ZSRO state may indicate a read only state. The ZSRO state may be corresponding to a space where the host device 1100 continues to use a zoned namespace after a portion of performance of a zone region or a unit zone region stops an operation. The ZSRO state may transition to the ZSO state by an offline zone command.

The ZSO state may indicate an offline state. The ZSO state may not have a valid write pointer, may not have active resources, and may not have open resources. The ZSO state may not have any other state capable of transitioning to.

FIG. 6 is a diagram describing a sequential write of a zone region according to some implementations of the present disclosure. Referring to FIGS. 1 and 6, the storage controller 1210 performs a sequential write operation of data within the non-volatile memory device 1220. The electronic device 1000 may manage a plurality of zoned namespaces ZNS1 to ZNSK. Herein, K is an arbitrary natural number.

Referring to the logical region, the first zoned namespace ZNS1 may include the zone regions ZR1, ZR2, and ZR3. The mapping ratio of the first zoned namespace ZNS1 may be 4. Each of the zone regions ZR1, ZR2, and ZR3 may be mapped to 4 unit zone regions. For example, the zone region ZR1 may be mapped to the unit zone regions UZR1 to UZR4. The unit zone region UZR1 may be mapped to logical block addresses LBA1 to LBAy. Herein, y is an arbitrary natural number. The logical block addresses LBA1 to LBAy may be logically sequential. The unit zone region UZR1 may range from a zone start logical block address ZSLBA to a zone last logical block address ZLLBA. The zone start logical block address ZSLBA may be LBA1. The zone last logical block address ZLLBA may be an address that is obtained by adding the logical block address LBAy and the unit size of the logical block address (e.g., may be a zone start logical block address of the unit zone region UZR2).

The storage controller 1210 may perform the sequential write operation by using the write pointer. For example, the logical block addresses LBA1 to LBAx of the unit zone region UZR1 may be logical block addresses (e.g., written logical block addresses) at which data are stored. Herein, x may be a natural number smaller than y. Shaded regions indicate logical or physical regions where data are stored. The logical block addresses LBAx+1 to LBAy of the unit zone region UZR1 may be logical block addresses (e.g., unwritten logical block addresses) where data are not yet stored. The write pointer may point out the last logical block address (e.g., LBAx) of the logical block addresses at which the write operation is completed. Data of the subsequent write operation may be stored in a physical region (e.g., a memory block BLKx+1) corresponding to LBAx+1; after the data are stored, the write pointer may be updated to point out a next logical block address (e.g., LBAx+1).

Referring to the physical region, the non-volatile memory device 1220 may include a plurality of memory blocks corresponding to the unit zone regions UZR1 to UZRM. The unit zone region UZR1 may include memory blocks BLK1 to BLKy. The memory blocks BLK1 to BLKy may be physically sequential (e.g., memory cells of the memory blocks BLK1 to BLKy may be disposed to be adjacent to each other). The memory blocks BLK1 to BLKy may be respectively identified by physical block addresses PBA1 to PBAy. The physical block addresses PBA1 to PBAy may respectively correspond to the logical block addresses LBA1 to LBAy of the logical region. The memory blocks BLK1 to BLKx may store data corresponding to the logical block addresses LBA1 to LBAx. The memory blocks BLKx+1 to BLKy may not yet store data and may be used to store data of a subsequent write operation.

For better understanding of the present disclosure, the description is given as one logical block address corresponds to one physical block address and one memory block, but the present disclosure is not limited thereto. Logical block addresses may respectively correspond to sequential sub-blocks, physical pages or sequential programming units (e.g., a unit by which memory cells are programmed) of one physical block, while maintaining the logical sequential feature. A correspondence relationship between a logical block address and a memory block may be variously changed and carried out by one skilled in the art.

FIG. 7 is a diagram describing how a zone region and a unit zone region are mapped, according to some implementations of the present disclosure. Referring to FIG. 7, metadata associated with a mapping relationship between a zone region and a unit zone region will be described. The unit zone region may include 16 memory blocks BLK1 to BLK16.

The metadata of the zone region ZR1 may include a mapping ratio, a state, and a write pointer. The mapping ratio of the zone region ZR1 may be 4. The zone region ZR1 may be mapped to 4 unit zone regions UZR1 to UZR4. A state of the zone region ZR1 may be an open state (e.g., the ZSIO state or the ZSEO state). The state of the zone region ZR1 may be determined based on states of the corresponding unit zone regions UZR1 to UZR4. The write pointer of the zone region ZR1 may be 31. The write pointer of the zone region ZR1 may be a sum of the write pointers of the corresponding unit zone regions UZR1 to UZR4.

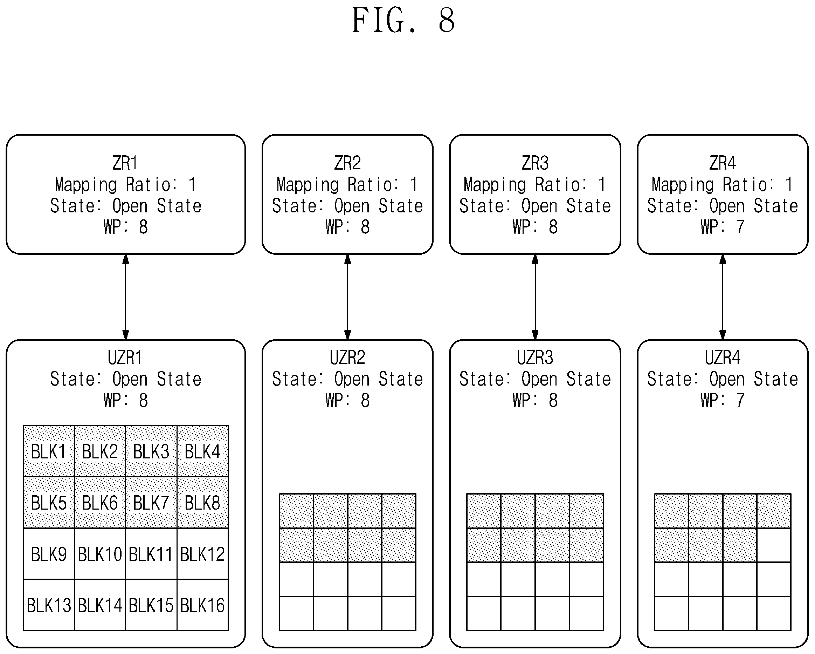

The metadata of the unit zone region UZR1 may include a state and a write pointer. A state of the unit zone region UZR1 may be an open state. For example, the unit zone region UZR1 may have the open state based on the open command or the write command. The write pointer of the unit zone region UZR1 may be 8. For example, the unit zone region UZR1 may be mapped to the memory blocks BLK1 to BLK16. Data may be present in the memory blocks BLK1 to BLK8. Data may be yet absent from the memory blocks BLK9 to BLK16. The write pointer may point out the last memory block among the memory blocks BLK1 to BLK8 where data are stored. In FIG. 8, shaded blocks indicate memory blocks where data are stored.

As in the above description, the metadata of the unit zone region UZR2 may include a state and a write pointer. A state of the unit zone region UZR2 may be an open state. The write pointer of the unit zone region UZR2 may be 8. The metadata of the unit zone region UZR3 may include a state and a write pointer. A state of the unit zone region UZR3 may be an open state. The write pointer of the unit zone region UZR3 may be 8. The metadata of the unit zone region UZR4 may include a state and a write pointer. A state of the unit zone region UZR4 may be an open state. The write pointer of the unit zone region UZR4 may be 7.

Referring to the zone region ZR1 and the unit zone regions UZR1 to UZR4 together, because at least one unit zone region among the unit zone regions UZR1 to UZR4 has the open state, the state of the zone region ZR1 may be determined as the open state. Because the sum of the write pointers of the unit zone regions UZR1 to UZR4 is 31, the write pointer of the zone region ZR1 may be 31.

In some implementations, the sequential feature of the unit zone region may be maintained, but the sequential feature of the zone region may not be maintained. For example, a storage device may store data in the memory blocks BLK1 to BLK4 of the zone region ZR1, may then store data in the memory blocks BLK1 to BLK4 of the zone region ZR2, and may then store data in the memory blocks BLK5 to BLK8 of the zone region ZR1. Data may be sequentially stored in memory blocks corresponding to one unit zone region, but an order of storing data may be random (or non-sequential) between unit zone regions.

FIG. 8 is a diagram describing how a zone region and a unit zone region are mapped, according to some implementations of the present disclosure. Referring to FIG. 8, metadata associated with a mapping relationship between a zone region and a unit zone region will be described. The unit zone region may include 16 memory blocks BLK1 to BLK16.

The metadata of the zone region ZR1 may include a mapping ratio, a state, and a write pointer. The mapping ratio of the zone region ZR1 may be 1. The zone region ZR1 may be mapped to the unit zone region UZR1. A state of the unit zone region ZR1 may be an open state. The write pointer of the zone region ZR1 may be 8.

As in the above description, the metadata of the unit zone region ZR2 may include a mapping ratio, a state, and a write pointer. The mapping ratio, the state, and the write pointer of the zone region ZR2 may respectively be 1, an open state, and 8. The metadata of the zone region ZR3 may include a mapping ratio, a state, and a write pointer. The mapping ratio, the state, and the write pointer of the zone region ZR3 may respectively be 1, an open state, and 8. The metadata of the zone region ZR4 may include a mapping ratio, a state, and a write pointer. The mapping ratio, the state, and the write pointer of the zone region ZR4 may respectively be 1, an open state, and 7.

The metadata of the unit zone region UZR1 may include a state and a write pointer. A state of the unit zone region UZR1 may be an open state. The write pointer of the unit zone region UZR1 may be 8. As in the above description, the metadata of the unit zone region UZR2 may include a state and a write pointer. A state of the unit zone region UZR2 may be an open state. The write pointer of the unit zone region UZR2 may be 8. The metadata of the unit zone region UZR3 may include a state and a write pointer. A state of the unit zone region UZR3 may be an open state. The write pointer of the unit zone region UZR3 may be 8. The metadata of the unit zone region UZR4 may include a state and a write pointer. A state of the unit zone region UZR4 may be an open state. The write pointer of the unit zone region UZR4 may be 7.

Referring to the zone regions ZR1 to ZR4 and the unit zone regions UZR1 to UZR4 together, because the mapping ratio is 1, the zone regions ZR1 to ZR4 may be respectively identical to the unit zone regions UZR1 to UZR4. In this case, the state of the zone region may be identical to the state of the unit zone region. The write pointer of the zone region may be identical to the write pointer of the unit zone region. That is, metadata of the zone region whose mapping ratio is 1 may cite the metadata of the corresponding unit zone region instead of collecting the metadata of the corresponding unit zone region.

FIG. 9 is a flowchart describing a method of operating an electronic device according to some implementations of the present disclosure. Referring to FIG. 9, the electronic device 1000 includes the host device 1100 and the storage device 1200.

In operation S110, the host device 1100 may provide the storage device 1200 with a first request RQ1 indicating the allocation operation of unit zone regions.

In some implementations, the host device 1100 may perform the allocation operation of a unit zone size. For example, the first request RQ1 may include the unit zone size. The unit zone size may refer to the number of memory blocks corresponding to one unit zone region.

In operation S111, the storage device 1200 may perform the allocation operation of unit zone regions, based on the first request RQ1. Each of the unit zone regions may have the unit zone size. Each of the plurality of unit zone regions may have a corresponding UZR index value. At least one memory block corresponding to the unit zone region may sequentially store data. After completing the allocation operation, the storage device 1200 may provide the host device 1100 with a completion response corresponding to the first request RQ1.

In operation S120, the host device 1100 may provide the storage device 1200 with a second request RQ2 indicating an allocation operation of a zoned namespace. In some implementations, the second request RQ2 may indicate an allocation operation of a plurality of zoned namespaces in the multi-ZNS environment.

In operation S121, the storage device 1200 may determine first metadata, based on the second request RQ2. The first metadata may include a maximum UZR index value that is used to identify the entire size of the zoned namespace. The first metadata may include a mapping ratio that is obtained by dividing the zone size of the zoned namespace by the unit zone size of the unit zone region.

In operation S122, the storage device 1200 may store the first metadata in a zone metadata table present in the storage device 1200.

In operation S130, the electronic device 1000 may perform a first user operation. For example, the host device 1100 may provide the storage device 1200 with a request indicating the first user operation, the storage device 1200 may perform the first user operation, and the storage device 1200 may provide the host device 1100 with a completion response of the first user operation.

In some implementations, the first user operation may include at least one of a state transition operation, a read operation, a write operation, and a metadata read operation of the zoned namespace in operation S120. The state transition operation may refer to an operation of changing a state in compliance with the ZNS standard (e.g., an operation of transitioning from a non-active state to an open state). The read operation may refer to an operation of reading data stored in a memory block corresponding to the zoned namespace. The write operation may refer to an operation of subsequently performing the sequential write with respect to the memory block corresponding to the zoned namespace. The metadata read operation may refer to an operation of reading metadata stored in the zone metadata table.

In some implementations, the electronic device 1000 may perform the first user operation and may update the zone metadata table. For example, the first user operation may be the state transition operation. The electronic device 1000 may store metadata on the changed state in the zone metadata table. As another example, the first user operation may be the write operation. After performing the sequential write, the electronic device 1000 may store metadata on the changed write pointer in the zone metadata table. When the write operation is performed with respect to the unit zone region being not in the open state, the electronic device 1000 may further store metadata indicating the ZSIO state in the zone metadata table.

In operation S140, the host device 1100 may provide the storage device 1200 with a third request RQ3 indicating a reallocation operation. In some implementations, the reallocation operation may refer to an operation of changing the size of the zoned namespace allocated in operation S120, the size of the zone region in the zoned namespace, or the number of zone regions in the zoned namespace.

In operation S141, the storage device 1200 may determine second metadata, based on the third request RQ3. The second metadata may include a maximum UZR index value that is used to identify the entire size of the reallocated zoned namespace. The second metadata may include a mapping ratio that is obtained by dividing the zone size of the reallocated zoned namespace by the unit zone size of the unit zone region.

In operation S142, the storage device 1200 may update the zone metadata table such that the first metadata are changed to the second metadata. In detail, the storage device 1200 may search the zone metadata table for the first metadata by using a ZNS index value corresponding to the reallocated zoned namespace and may determine whether the found first metadata are matched with the second metadata; when it is determined that the found first metadata are not matched with the second metadata, the storage device 1200 may update the zone metadata table such that the first metadata are changed to the second metadata. When the found first metadata are matched with the second metadata, the storage device 1200 may maintain the first metadata in the zone metadata table.

In operation S150, the electronic device 1000 may perform a second user operation. For example, the host device 1100 may provide the storage device 1200 with a request indicating the second user operation, the storage device 1200 may perform the second user operation, and the storage device 1200 may provide the host device 1100 with a completion response of the second user operation.

In some implementations, the second user operation may include at least one of the state transition operation, the read operation, the write operation, and the metadata read operation of the zoned namespace reallocated in operation S140.

In some implementations, the electronic device 1000 may perform the second user operation and may update the zone metadata table. For example, the second user operation may be the state transition operation or the write operation.

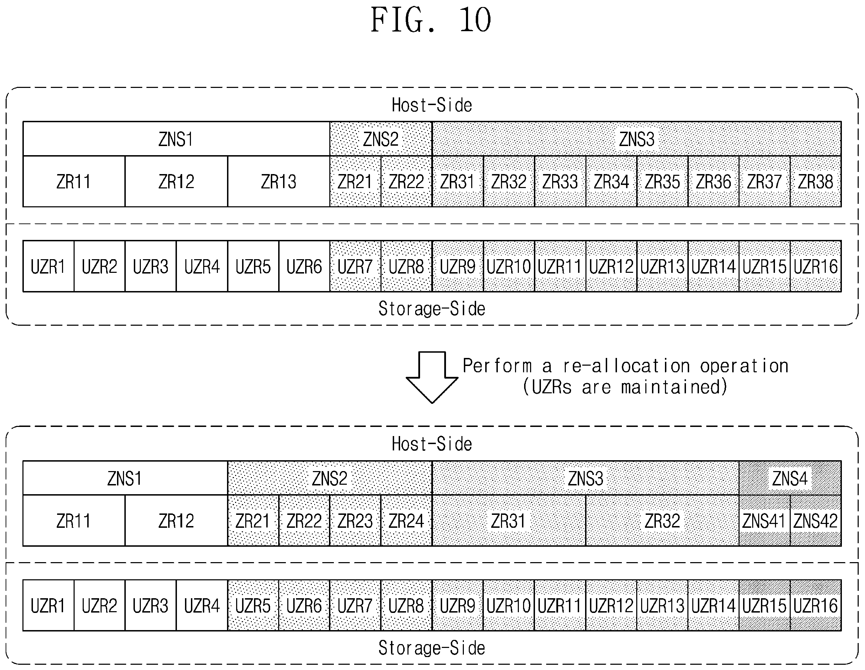

FIG. 10 is a diagram describing a reallocation operation of FIG. 9, according to some implementations of the present disclosure. Logical regions of a zoned namespace, a zone region, and unit zone regions associated with the reallocation operation performed in operation S140 will be described with reference to FIGS. 9 and 10. A host side may correspond to the host device 1100. A storage side may correspond to the storage device 1200.

Referring to the logical region before the reallocation operation is performed, the host side may use the first zoned namespace ZNS1, the second zoned namespace ZNS2, and the third zoned namespace ZNS3. For better understanding of the present disclosure, logical regions corresponding to the first zoned namespace ZNS1, the second zoned namespace ZNS2, and the third zoned namespace ZNS3 are marked in different styles of shading.

The first zoned namespace ZNS 1, the second zoned namespace ZNS2, and the third zoned namespace ZNS3 may be logically sequential. For example, the last zone region from among zone regions of the first zoned namespace ZNS1 and the first zone region from among zone regions of the second zoned namespace ZNS2 may be logically sequential. The last zone region from among the zone regions of the second zoned namespace ZNS2 and the first zone region from among zone regions of the third zoned namespace ZNS3 may be logically sequential.

The first zoned namespace ZNS1 may include zone regions ZR11, ZR12, and ZR13. The zone size of the first zoned namespace ZNS1 may be two times the unit zone size. The mapping ratio of the first zoned namespace ZNS1 may be 2. The maximum UZR index value of the first zoned namespace ZNS1 may correspond to UZR6. The entire size of the first zoned namespace ZNS1 may be identified by the maximum UZR index value of the first zoned namespace ZNS1. The first zoned namespace ZNS1 may be mapped to unit zone regions UZR1 to UZR6, based on the mapping ratio and the maximum UZR index value.

The second zoned namespace ZNS2 may include zone regions ZR21 and ZR22. The zone size of the second zoned namespace ZNS2 may be identical to the unit zone size. The mapping ratio of the second zoned namespace ZNS2 may be 1. The maximum UZR index value of the second zoned namespace ZNS2 may correspond to UZR8. The entire size of the second zoned namespace ZNS2 may be identified by a difference between the maximum UZR index value of the second zoned namespace ZNS2 and the maximum UZR index value of the first zoned namespace ZNS 1. The second zoned namespace ZNS2 may be mapped to unit zone regions UZR7 and UZR8, based on the mapping ratio and the maximum UZR index value.

The third zoned namespace ZNS3 may include zone regions ZR31, ZR32, ZR33, ZR34, ZR35, ZR36, ZR37, and ZR38. The zone size of the third zoned namespace ZNS3 may be identical to the unit zone size. The mapping ratio of the third zoned namespace ZNS3 may be 1. The maximum UZR index value of the third zoned namespace ZNS3 may correspond to UZR16. The entire size of the third zoned namespace ZNS3 may be identified by a difference between the maximum UZR index value of the third zoned namespace ZNS3 and the maximum UZR index value of the second zoned namespace ZNS2. The third zoned namespace ZNS3 may be mapped to unit zone regions UZR9, UZR10, UZR11, UZR12, UZR13, UZR14, UZR15, and UZR16, based on the mapping ratio and the maximum UZR index value.

Next, referring to the logical region after the reallocation operation is performed, the reallocation operation may include an operation of decreasing the entire size of the first zoned namespace ZNS 1, an operation of increasing the entire size of the second zoned namespace ZNS2, an operation of decreasing the entire size of the third zoned namespace ZNS3, an operation of changing the mapping ratio of the third zoned namespace ZNS3, and an operation of adding (e.g., newly adding) a fourth zoned namespace ZNS4.

After the reallocation operation, the host side may use the first zoned namespace ZNS1, the second zoned namespace ZNS2, the third zoned namespace ZNS3, and the fourth zoned namespace ZNS4. For better understanding of the present disclosure, logical regions corresponding to the reallocated zoned namespaces ZNS1, ZNS2, ZNS3, and ZNS4 are marked in different styles of shading. The zoned namespaces ZNS1, ZNS2, ZNS3, and ZNS4 may be logically sequential.

The reallocated first zoned namespace ZNS1 may include zone regions ZR11 and ZR12. The mapping ratio of the reallocated first zoned namespace ZNS1 may be 2. The maximum UZR index value of the reallocated first zoned namespace ZNS1 may correspond to UZR4. The reallocated first zoned namespace ZNS1 may be mapped to the unit zone regions UZR1 to UZR4, based on the mapping ratio and the maximum UZR index value.

The reallocated second zoned namespace ZNS2 may include zone regions ZR21, ZR22, ZR23, and ZR24. The mapping ratio of the reallocated second namespace ZNS2 may be 1. The maximum UZR index value of the reallocated second zoned namespace ZNS2 may correspond to UZR8. The reallocated second zoned namespace ZNS2 may be mapped to the unit zone regions UZR5, UZR6, UZR7, and UZR8, based on the mapping ratio and the maximum UZR index value.

The reallocated third zoned namespace ZNS3 may include zone regions ZR31 and ZR32. The mapping ratio of the reallocated zoned namespace ZNS3 may be 3. The maximum UZR index value of the reallocated third zoned namespace ZNS3 may correspond to UZR14. The reallocated third zoned namespace ZNS3 may be mapped to the unit zone regions UZR9, UZR10, UZR11, UZR12, UZR13, and UZR14, based on the mapping ratio and the maximum UZR index value.

The fourth zoned namespace ZNS4 may be newly added by the reallocation operation. The fourth zoned namespace ZNS4 may include zone regions ZR41 and ZR42. The mapping ratio of the fourth zoned namespace ZNS4 may be 1. The maximum UZR index value of the fourth zoned namespace ZNS4 may correspond to UZR16. The fourth zoned namespace ZNS4 may be mapped to the unit zone regions UZR15 and UZR16, based on the mapping ratio and the maximum UZR index value.

In some implementations, an electronic device may partition the zoned namespace through the reallocation operation. For example, the reallocation operation may include an operation of decreasing the entire size of the third zoned namespace ZNS3 and an operation of adding the fourth zoned namespace ZNS4. The entire size of the third zoned namespace ZNS3 before the reallocation operation may be identical to a sum of the entire size of the third zoned namespace ZNS3 decreased after the reallocation operation and the entire size of the fourth zoned namespace ZNS4 added after the reallocation operation. The third zoned namespace ZNS3 may be partitioned by updating the zone metadata table such that the maximum UZR index value of the third zoned namespace ZNS3 before the reallocation operation is changed to the maximum UZR index value of the third zoned namespace ZNS3 and the maximum UZR index value of the fourth zoned namespace ZNS4 after the reallocation operation.

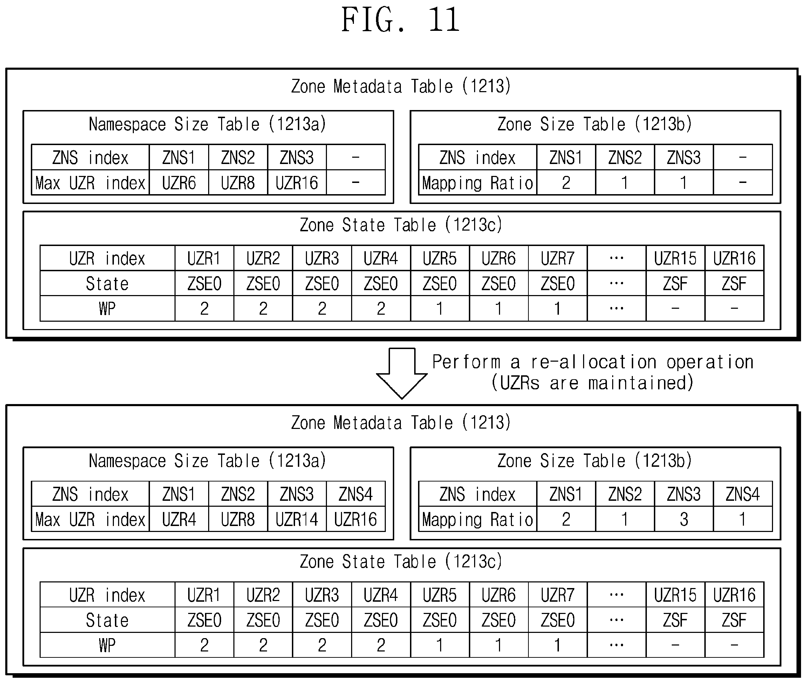

FIG. 11 is a diagram describing a reallocation operation of FIG. 9, according to some implementations of the present disclosure. How the metadata of the zone metadata table 1213 are updated in the reallocation operation performed in operation S140 will be described with reference to FIGS. 9, 10, and 11. The storage device 1200 may include the zone metadata table 1213. The zone metadata table 1213 may include the namespace size table 1213a, the zone size table 1213b, and the zone state table 1213c. The namespace size table 1213a may store sets of a ZNS index value and a maximum UZR index value. The zone size table 1213b may store sets of a ZNS index value and a mapping ratio. The zone state table 1213c may store sets of an UZR index value, a state, and a write pointer.

Referring to the zone metadata table 1213 before the reallocation operation is performed, the namespace size table 1213a may store the maximum UZR index values UZR6, UZR8, and UZR16 respectively corresponding to the zoned namespaces ZNS1, ZNS2, and ZNS3. The zone size table 1213b may store the mapping ratios of 2, 1, and 1 respectively corresponding to the zoned namespaces ZNS1, ZNS2, and ZNS3. The zone state table 1213c may store an UZR index value, a state, and a write pointer of each of the unit zone regions UZR1 to UZR16.

Referring to the zone metadata table 1213 after the reallocation operation is performed, the namespace size table 1213a may store the maximum UZR index values UZR4, UZR8, UZR14, and UZR16 respectively corresponding to the zoned namespaces ZNS1, ZNS2, ZNS3, and ZNS4. The zone size table 1213b may store the mapping ratios of 2, 1, 3, and 1 respectively corresponding to the zoned namespaces ZNS1, ZNS2, ZNS3, and ZNS4. The metadata of the zone state table 1213c may be identical to the metadata before the reallocation operation. The metadata of the zone state table 1213c may be updated by the user operation (e.g., the state transition operation or the write operation).

As described above, according to implementations of the present disclosure, the electronic device 1000 may dynamically change the size of the zoned namespace or the zone region or the number of zoned namespaces or zone regions by updating only the metadata of the zoned namespace in the zone metadata table 1213 while maintaining mapping relationships between memory blocks and unit zone regions without modification. Compared to the conventional electronic device ED of FIG. 3, there may be reduced a resource, a power, and a processing time of the electronic device 1000, which are desirable to change the size of the zoned namespace or the zone region or the number of zoned namespaces or zone regions.

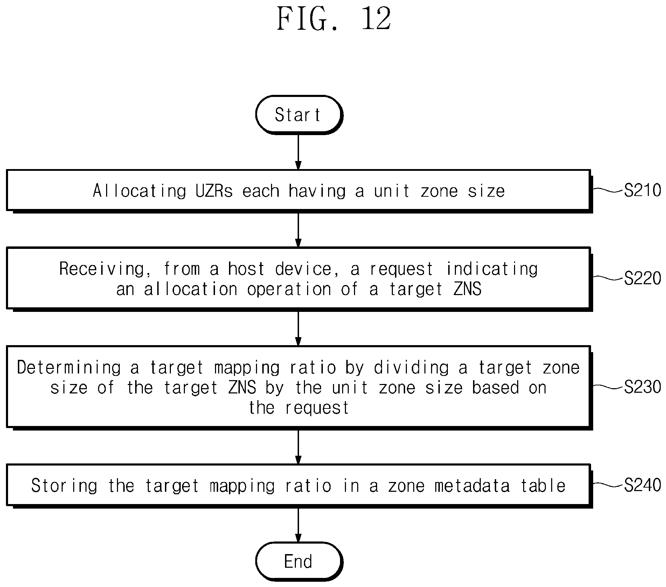

FIG. 12 is a flowchart describing a method of operating a storage device according to some implementations of the present disclosure. Referring to FIG. 12, a storage device communicates with a host device. The storage device may include a zone metadata table.

In operation S210, the storage device allocates a plurality of unit zone regions each having the unit zone size. The plurality of unit zone regions may be mapped to at least one memory blocks in a non-volatile memory device. The unit zone size may refer to the number of memory blocks mapped to one unit zone region. The storage device may internally manage unit zone regions, and it may be difficult for the host device to directly identify the unit zone regions.

In operation S220, the storage device receives a request indicating an allocation operation of a target zoned namespace from the host device. The target zoned namespace may include a plurality of zone regions. The zone regions may be also referred to as "host zone regions". Each of the zone regions may have a target zone size.

In operation S230, the storage device determines a target mapping ratio by dividing the target zone size of the target zoned namespace by the unit zone size, based on the request in operation S220. The target mapping ratio may indicate the number of unit zone regions mapped to one host zone unit (e.g., a zone region).

In operation S240, the storage device stores the target mapping ratio in the zone metadata table. Afterwards, the storage device may provide a completion response to the host device.

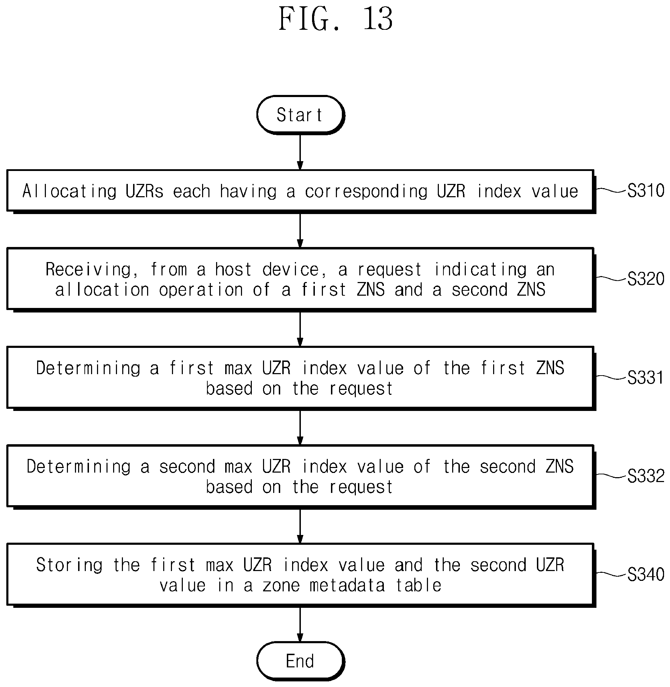

FIG. 13 is a flowchart describing a method of operating a storage device according to some implementations of the present disclosure. Referring to FIG. 13, a storage device communicates with a host device. The storage device may include a zone metadata table.

In operation S310, the storage device allocates a plurality of unit zone regions each having a corresponding UZR index value. The plurality of unit zone regions may have the same size. The UZR index value may be a unique value for identifying a corresponding unit zone region among the plurality of unit zone regions.

In operation S320, the storage device receives a request indicating an allocation operation of a first zoned namespace and a second zoned namespace. The first zoned namespace may include a plurality of first zone regions. The first zone regions of the first zoned namespace may be mapped to some of the plurality of unit zone regions allocated in operation S310. The second zoned namespace may include a plurality of second zone regions. The second zone regions of the second zoned namespace may be mapped to the others of the plurality of unit zone regions allocated in operation S310.

In operation S331, the storage device determines a first maximum UZR index value of the first zoned namespace, based on the request received in operation S320. The first maximum UZR index value may correspond to the last unit zone region among the unit zone regions corresponding to the first zoned namespace.

In operation S332, the storage device determines a second maximum UZR index value of the second zoned namespace, based on the request received in operation S320. The second maximum UZR index value may correspond to the last unit zone region among the unit zone regions corresponding to the second zoned namespace.

In operation S340, the storage device stores the first maximum UZR index value and the second maximum UZR index value in the zone metadata table. Afterwards, the storage device may provide a completion response to the host device.

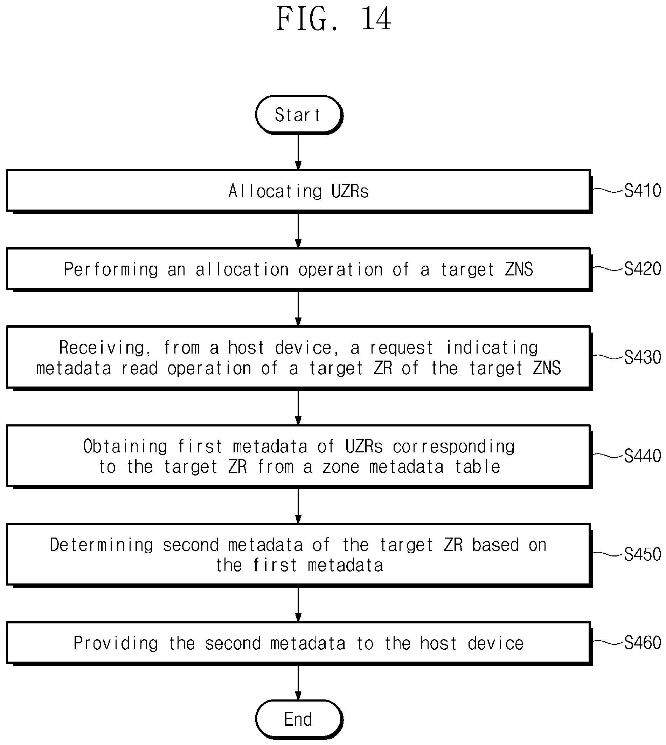

FIG. 14 is a flowchart describing a method of operating a storage device according to some implementations of the present disclosure. Referring to FIG. 14, a storage device communicates with a host device. The storage device may include a zone metadata table.

In operation S410, the storage device allocates a plurality of unit zone regions. Each of the unit zone regions may have the unit zone size. Each of the plurality of unit zone regions may have a corresponding UZR index value. Operation S410 may correspond to operation S210 of FIG. 12 and operation S310 of FIG. 13.

In operation S420, the storage device performs an allocation operation of a target zoned namespace. The target zoned namespace may include a plurality of zone regions. The plurality of zone regions of the target zoned namespace may be mapped to the plurality of unit zone regions allocated in operation S410. The storage device may store a mapping ratio of the target zoned namespace and a maximum UZR index value of the target zoned namespace in the zone metadata table. The storage device may provide a completion response to the host device. Operation S420 may correspond to operation S220, operation S230, and operation S240 of FIG. 12 and operation S320, operation S331, operation S332, and operation S340 of FIG. 13.

In operation S430, the storage device receives a request indicating a metadata read operation of the target zone region of the target zoned namespace from the host device. The target zone region may be one of the plurality of zone regions included in the target zoned namespace. The unit zone regions corresponding to the target zone region may have states and write pointers, and the states and the write pointers may be managed by using the zone metadata table.

In operation S440, the storage device obtains first metadata of the unit zone regions corresponding to the target zone region from the zone metadata table. The first metadata may include states or write pointers of corresponding unit zone regions.

In operation S450, the storage device determines second metadata of the target zone region, based on the first metadata obtained in operation S440. The second metadata may include a state or a write pointer of a target zone region. That is, the storage device may collect the metadata of the unit zone regions corresponding to the target zone region to determine the metadata of the target zone region.

In some implementations, the storage device determines the second metadata of the write pointer of the target zone region, based on the first metadata on the write pointers of the unit zone regions. For example, the storage device may determine that the write pointer of the target zone region corresponds to a sum of the write pointers of the unit zone regions corresponding to the target zone region.

In some implementations, the storage device determines the second metadata of the state of the target zone region, based on the first metadata of the states of the unit zone regions. For example, the storage device may determine whether an open state is present in the states of the unit zone regions corresponding to the target zone region. The storage device may determine that the state of the target zone region is the open state, in response to determining that the open state is present in the states of the unit zone regions corresponding to the target zone region.

In operation S460, the storage device provides the second metadata to the host device. The second metadata may be a response to the metadata read operation of the target zone region, which is performed in operation S430.

According to an implementation of the present disclosure, a storage device allocating unit zone regions and a method of operating the storage device are provided.

Also, a storage device that reduces a resource, a power, and a processing time desirable for a size change of a namespace or a host zone region by updating only metadata between a unit zone region and a host zone region without the deallocation or reallocation of physical memory blocks when a reallocation request for the host zone region is received from a host side and a method of operating the storage device are provided.

While this disclosure contains many specific implementation details, these should not be construed as limitations on the scope of the present invention as defined according to the following claims. Certain features that are described in this disclosure in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations, one or more features from a combination can in some implementations be excised from the combination, and the combination may be directed to a sub-combination or variation of a sub-combination.

While the present disclosure has been described with reference to implementations thereof, it will be apparent to those of ordinary skill in the art that various changes and modifications may be made thereto without departing from the scope of the present invention as set forth in the following claims.

## Claims

1. A method of operating a storage device (1200), the method comprising:
allocating a plurality of unit zone regions (UZR1 - UZRM), each unit zone region (UZR1, UZRM) having a unit zone size, wherein each unit zone region (UZR1, UZRM) of the plurality of unit zone regions (UZR1 - UZRM) is mapped to at least one corresponding memory block (BLK) among a plurality of memory blocks in the storage device (1200), and wherein each unit zone region (UZR1, UZRM) of the plurality of unit zone regions (UZR1 - UZRM) supports a sequential write in compliance with a zoned namespace, ZNS, standard;
**characterised in that** the method further comprises:
receiving a first request indicating an allocation operation of a first zoned namespace (ZNS1) in compliance with the ZNS standard from a host device (1100);
determining a first mapping ratio by dividing a first zone size of the first zoned namespace (ZNS1) by the unit zone size, based on the first request; and
storing the first mapping ratio in a zone metadata table (1213) of the storage device (1200).

2. The method of claim 1, wherein the zone metadata table (1213) includes:
a namespace size table (1213a) configured to store a first maximum unit zone region, UZR, index value corresponding to a last unit zone region (UZR8) among unit zone regions (UZR1 - UZR8) corresponding to the first zoned namespace (ZNS1) from among the plurality of unit zone regions (UZR1 - UZRM);
a zone size table (1213b) configured to store the first mapping ratio; and
a zone state table (1213c) configured to store a state and a write pointer of each of the plurality of unit zone regions (UZR1 - UZRM).

3. The method of claim 1 or 2, wherein the unit zone size corresponds to one of:
a memory block (BLK);
a first number of memory blocks in compliance with an operating policy of the storage device (1200); or
a second number of memory blocks determined by the host device (1100).

4. The method of any preceding claim, wherein each of the plurality of unit zone regions (UZR1 - UZRM) has a corresponding UZR index value, and
wherein the method further comprises:
determining a first maximum UZR index value of the first zoned namespace (ZNS1) based on the first request, wherein the first maximum UZR index value corresponds to a last unit zone region (UZR8) among unit zone regions (UZR1 - UZR8) corresponding to the first zoned namespace (ZNS1) from among the plurality of unit zone regions (UZR1 - UZRM); and
storing the first maximum UZR index value in the zone metadata table (1213) of the storage device (1200).

5. The method of any preceding claim, wherein the allocation operation includes an allocation operation of a second zoned namespace (ZNS2) in compliance with the ZNS standard, and
wherein a last zone region among zone regions of the first zoned namespace (ZNS1) and a first zone region among zone regions of the second zoned namespace (ZNS2) are logically sequential.

6. The method of claim 5, wherein each of the plurality of unit zone regions (UZR1 - UZRM) has a corresponding UZR index value, and
wherein the method further comprises:
determining a second mapping ratio by dividing a second zone size of the second zoned namespace (ZNS2) by the unit zone size, based on the first request;
storing the second mapping ratio in the zone metadata table (1213) of the storage device (1200);
determining a second maximum UZR index value of the second zoned namespace (ZNS2) based on the first request, wherein the second maximum UZR index value corresponds to a last unit zone region (UZR12) among unit zone regions (UZR9 - UZR12) corresponding to the second zoned namespace (ZNS2) from among the plurality of unit zone regions (UZR1 - UZRM); and
storing the second maximum UZR index value in the zone metadata table (1213) of the storage device (1200).

7. The method of any preceding claim, further comprising:
after storing the first mapping ratio, receiving a second request indicating a first user operation of the first zoned namespace (ZNS1) from the host device (1100), wherein the first user operation indicates a state transition operation, a read operation, a write operation, or a metadata read operation of the first zoned namespace (ZNS1); and
performing the first user operation, based on the second request.

8. The method of claim 7, wherein the first user operation indicates the state transition operation or the write operation of a target zone region among zone regions of the first zoned namespace (ZNS1),
wherein the performing of the first user operation based on the second request includes:
updating the zone metadata table (1213) such that a write pointer or a state of each of unit zone regions corresponding to the target zone region is changed, and
wherein the state complies with the ZNS standard.

9. The method of claim 7 or 8, wherein the first user operation indicates the metadata read operation of a target zone region among zone regions of the first zoned namespace (ZNS1), and
wherein the performing of the first user operation based on the second request includes:
obtaining first metadata of unit zone regions corresponding to the target zone region from among the plurality of unit zone regions from the zone metadata table (1213);
determining second metadata of the target zone region, based on the first metadata; and
providing the second metadata to the host device (1100).

10. The method of claim 9, wherein the first metadata includes first write pointers respectively corresponding to the unit zone regions corresponding to the target zone region,
wherein the second metadata includes a second write pointer of the target zone region, and
wherein the determining of the second metadata of the target zone region based on the first metadata includes:
determining that the second write pointer of the target zone region is a sum of the first write pointers of the unit zone regions corresponding to the target zone region.

11. The method of claim 9 or 10, wherein the first metadata includes first states respectively corresponding to the unit zone regions corresponding to the target zone region, the first states complying with the ZNS standard,
wherein the second metadata includes a second state of the target zone region, the second states complying with the ZNS standard, and
wherein the determining of the second metadata of the target zone region based on the first metadata includes:
determining whether an open state is present in the first states; and
determining that the second state is the open state, in response to determining that the open state is present in the first states.

12. The method of any preceding claim, further comprising:
after storing the first mapping ratio, receiving a third request indicating a reallocation operation of the first zoned namespace (ZNS1) in compliance with the ZNS standard from the host device (1100);
determining a third mapping ratio by dividing a third zone size of the first zoned namespace (ZNS1) by the unit zone size, based on the third request; and
updating the third mapping ratio in the zone metadata table (1213) of the storage device (1200).

13. The method of claim 12, wherein the updating of the third mapping ratio in the zone metadata table (1213) of the storage device (1200) includes:
searching the zone metadata table (1213) for the first mapping ratio by using a ZNS index value corresponding to the first zoned namespace (ZNS1);
determining whether the third mapping ratio coincides with the first mapping ratio; and
in response to determining that the third mapping ratio does not coincide with the first mapping ratio, updating the zone metadata table (1213) such that the first mapping ratio is changed to the third mapping ratio.

14. The method of claim 12 or 13, wherein the reallocation operation of the first zoned namespace (ZNS1) includes an operation of decreasing the first zoned namespace (ZNS1) and an operation of adding a third zoned namespace (ZNS3),
wherein a first logical size of the first zoned namespace (ZNS1) before the reallocation operation is identical to a sum of a second logical size of the first zoned namespace (ZNS1) thus decreased and a third logical size of the third zoned namespace (ZNS3), and
wherein the method further comprises:
determining a third maximum UZR index value corresponding to the first zoned namespace (ZNS1) thus decreased, based on the third request;
determining a fourth maximum UZR index value corresponding to the third zoned namespace (ZNS3), based on the third request; and
updating the zone metadata table (1213) of the storage device (1200) such that a previous UZR index value of the first zoned namespace (ZNS1) before the reallocation operation is changed to the third maximum UZR index value and the fourth maximum UZR index value.

15. The method of any one of claims 12 to 14, further comprising:
after updating the third mapping ratio, receiving a fourth request indicating a second user operation of the first zoned namespace (ZNS1) from the host device (1100), wherein the second user operation indicates a state transition operation, a read operation, a write operation, or a metadata read operation of the first zoned namespace (ZNS1); and
performing the second user operation, based on the fourth request.

## Patentansprüche

1. Verfahren zum Betrieb einer Speichervorrichtung (1200), wobei das Verfahren Folgendes umfasst:
Zuordnen einer Vielzahl von Einheitszonenbereichen (UZR1 - UZRM), wobei jeder Einheitszonenbereich (UZR1, UZRM) eine Einheitszonengröße aufweist, wobei jeder Einheitszonenbereich (UZR1, UZRM) der Vielzahl von Einheitszonenbereichen (UZR1 - UZRM) mindestens einem entsprechenden Speicherblock (BLK) unter einer Vielzahl von Speicherblöcken in der Speichervorrichtung (1200) zugeordnet ist und wobei jeder Einheitszonenbereich (UZR1, UZRM) der Vielzahl von Einheitszonenbereichen (UZR1 - UZRM) einen sequenziellen Schreibvorgang unter Einhaltung eines zonierten Namensraum-, ZNS, Standards unterstützt;
**dadurch gekennzeichnet, dass** das Verfahren ferner Folgendes umfasst:
Empfangen einer ersten Anfrage, die eine Zuordnungsoperation eines ersten zonierten Namensraums (ZNS1) unter Einhaltung des ZNS-Standards angibt, von einer Hostvorrichtung (1100);
Bestimmen eines ersten Zuordnungsverhältnisses durch Division einer ersten Zonengröße des ersten zonierten Namensraums (ZNS1) durch die Einheitszonengröße, basierend auf der ersten Anfrage; und
Speichern des ersten Zuordnungsverhältnisses in einer Zonenmetadatentabelle (1213) der Speichervorrichtung (1200).

2. Verfahren nach Anspruch 1, wobei die Zonenmetadatentabelle (1213) Folgendes einschließt:
eine Namensraumgrößentabelle (1213a), die so konfiguriert ist, dass sie einen ersten maximalen Einheitszonenbereichs-, UZR, Indexwert speichert, der einem letzten Einheitszonenbereich (UZR8) unter Einheitszonenbereichen (UZR1- UZR8) entspricht, die dem ersten zonierten Namensraum (ZNS1) unter der Vielzahl von Einheitszonenbereichen (UZR1 - UZRM) entsprechen;
eine Zonengrößentabelle (1213b), die so konfiguriert ist, dass sie das erste Zuordnungsverhältnis speichert; und
eine Zonenstatustabelle (1213c), die so konfiguriert ist, dass sie einen Status und einen Schreibzeiger für jeden der Vielzahl von Einheitszonenbereichen (UZR1 - UZRM) speichert.

3. Verfahren nach Anspruch 1 oder 2, wobei die Einheitszonengröße einem der Folgenden entspricht:
einem Speicherblock (BLK);
einer ersten Anzahl von Speicherblöcken unter Einhaltung einer Betriebsrichtlinie der Speichervorrichtung (1200); oder
einer zweiten Anzahl von Speicherblöcken, die von der Hostvorrichtung (1100) bestimmt wird.

4. Verfahren nach einem vorstehenden Anspruch, wobei jeder der Vielzahl von Einheitszonenbereiche (UZR1 - UZRM) einen entsprechenden UZR-Indexwert aufweist, und
wobei das Verfahren ferner Folgendes umfasst:
Bestimmen eines ersten maximalen UZR-Indexwerts des ersten zonierten Namensraums (ZNS1) basierend auf der ersten Anfrage, wobei der erste maximale UZR-Indexwert einem letzten Einheitszonenbereich (UZR8) unter Einheitszonenbereichen (UZR1 - UZR8) entspricht, die dem ersten zonierten Namensraum (ZNS1) unter der Vielzahl von Einheitszonenbereichen (UZR1 - UZRM) entsprechen; und
Speichern des ersten maximalen UZR-Indexwerts in der Zonenmetadatentabelle (1213) der Speichervorrichtung (1200).

5. Verfahren nach einem vorstehenden Anspruch, wobei die Zuordnungsoperation eine Zuordnungsoperation eines zweiten zonierten Namensraums (ZNS2) unter Einhaltung des ZNS-Standards einschließt, und
wobei ein letzter Zonenbereich unter Zonenbereichen des ersten zonierten Namensraums (ZNS1) und ein erster Zonenbereich unter Zonenbereichen des zweiten zonierten Namensraums (ZNS2) logisch aufeinanderfolgend sind.

6. Verfahren nach Anspruch 5, wobei jeder der Vielzahl von Einheitszonenbereichen (UZR1 - UZRM) einen entsprechenden UZR-Indexwert aufweist, und
wobei das Verfahren ferner Folgendes umfasst:
Bestimmen eines zweiten Zuordnungsverhältnisses durch Division der zweiten Zonengröße des zweiten zonierten Namensraums (ZNS2) durch die Einheitszonengröße, basierend auf der ersten Anfrage;
Speichern des zweiten Zuordnungsverhältnisses in der Zonenmetadatentabelle (1213) der Speichervorrichtung (1200);
Bestimmen eines zweiten maximalen UZR-Indexwerts des zweiten zonierten Namensraums (ZNS2) basierend auf der ersten Anfrage, wobei der zweite maximale UZR-Indexwert einem letzten Einheitszonenbereich (UZR12) unter Einheitszonenbereichen (UZR9 - UZR12) entspricht, die dem zweiten zonierten Namensraum (ZNS2) unter der Vielzahl von Einheitszonenbereichen (UZR1 - UZRM) entsprechen; und
Speichern des zweiten maximalen UZR-Indexwerts in der Zonenmetadatentabelle (1213) der Speichervorrichtung (1200).

7. Verfahren nach einem vorstehenden Anspruch, ferner umfassend:
nach dem Speichern des ersten Zuordnungsverhältnisses, Empfangen einer zweiten Anfrage von der Hostvorrichtung (1100), die eine erste Benutzeroperation des ersten zonierten Namensraums (ZNS1) angibt, wobei die erste Benutzeroperation eine Statusübergangsoperation, eine Leseoperation, eine Schreiboperation oder eine Metadatenleseoperation des ersten zonierten Namensraums (ZNS1) angibt; und
Durchführen der ersten Benutzeroperation basierend auf der zweiten Anfrage.

8. Verfahren nach Anspruch 7, wobei die erste Benutzeroperation die Statusübergangsoperation oder die Schreiboperation eines Zielzonenbereichs unter Zonenbereichen des ersten zonierten Namensraums (ZNS1) angibt.
wobei das Durchführen der ersten Benutzeroperation basierend auf der zweiten Anfrage Folgendes umfasst:
Aktualisieren der Zonenmetadatentabelle (1213), so dass ein Schreibzeiger oder ein Status jedes Einheitszonenbereichs, der dem Zielzonenbereich entspricht, geändert wird, und
wobei der Status den ZNS-Standard einhält.

9. Verfahren nach Anspruch 7, wobei die erste Benutzeroperation die Metadatenleseoperation eines Zielzonenbereichs unter Zonenbereichen des ersten zonierten Namensraums (ZNS1) angibt, und
wobei das Durchführen der ersten Benutzeroperation basierend auf der zweiten Anfrage Folgendes umfasst:
Erhalten erster Metadaten von den Einheitszonenbereichen unter der Vielzahl von Einheitszonenbereichen, die dem Zielzonenbereich entsprechen, aus der Zonenmetadatentabelle (1213);
Bestimmen zweiter Metadaten des Zielzonenbereichs basierend auf den ersten Metadaten; und Bereitstellen der zweiten Metadaten an die Hostvorrichtung (1100).

10. Verfahren nach Anspruch 9, wobei die ersten Metadaten erste Schreibzeiger einschließen, die jeweils den Einheitszonenbereichen entsprechen, die dem Zielzonenbereich entsprechen,
wobei die zweiten Metadaten einen zweiten Schreibzeiger des Zielzonenbereichs einschließen und
wobei das Bestimmen der zweiten Metadaten des Zielzonenbereichs basierend auf den ersten Metadaten Folgendes einschließt:
Bestimmen, dass der zweite Schreibzeiger des Zielzonenbereichs die Summe der ersten Schreibzeiger der Einheitszonenbereiche ist, die dem Zielzonenbereich entsprechen.

11. Verfahren nach Anspruch 9 oder 10, wobei die ersten Metadaten erste Status einschließen, die jeweils den Einheitszonenbereichen des Zielzonenbereichs entsprechen, wobei die ersten Status den ZNS-Standard einhalten,
wobei die zweiten Metadaten einen zweiten Status des Zielzonenbereichs einschließen, wobei die zweiten Status den ZNS-Standard einhalten, und
wobei das Bestimmen der zweiten Metadaten des Zielzonenbereichs basierend auf den ersten Metadaten Folgendes einschließt:
Bestimmen, ob in den ersten Status ein offener Status vorliegt; und
Bestimmen, dass der zweite Status der offene Status ist, als Reaktion auf Bestimmen, dass der offene Status in den ersten Status vorhanden ist.

12. Verfahren nach einem vorstehenden Anspruch, ferner umfassend:
nach Speichern des ersten Zuordnungsverhältnisses, Empfangen einer dritten Anfrage von einer Hostvorrichtung (1100), die eine Neuzuordnungsoperation des ersten zonierten Namensraums (ZNS1) unter Einhaltung des ZNS-Standards angibt;
Bestimmen eines dritten Zuordnungsverhältnisses durch Dividieren einer dritten Zonengröße des ersten zonierten Namensraums (ZNS1) durch die Einheitszonengröße, basierend auf der dritten Anfrage; und
Aktualisieren des dritten Zuordnungsverhältnisses in der Zonenmetadatentabelle (1213) der Speichervorrichtung (1200).

13. Verfahren nach Anspruch 12, wobei das Aktualisieren des dritten Zuordnungsverhältnisses in der Zonenmetadatentabelle (1213) der Speichervorrichtung (1200) Folgendes einschließt:
Durchsuchen der Zonenmetadatentabelle (1213) nach dem ersten Zuordnungsverhältnis unter Verwendung eines ZNS-Indexwerts, der dem ersten zonierten Namespace (ZNS1) entspricht;
Bestimmen, ob das dritte Zuordungsverhältnis mit dem ersten Zuordungsverhältnis übereinstimmt; und
als Reaktion auf Bestimmen, dass das dritte Zuordungsverhältnis nicht mit dem ersten Zuordungsverhältnis übereinstimmt, Aktualisieren der Zonenmetadatentabelle (1213), so dass das erste Zuordungsverhältnis in das dritte Zuordungsverhältnis geändert wird.

14. Verfahren nach Anspruch 12 oder 13, wobei die Neuzuordnungsoperation des ersten zonierten Namensraums (ZNS1) eine Operation zum Verringern des ersten zonierten Namensraums (ZNS1) und eine Operation zum Hinzufügen eines dritten zonierten Namensraums (ZNS3) einschließt.
wobei eine erste logische Größe des ersten zonierten Namensraums (ZNS1) vor der Neuzuordungsoperation identisch ist mit einer Summe aus einer zweiten logischen Größe des ersten zonierten Namensraums (ZNS1), die so verringert wurde, und einer dritten logischen Größe des dritten zonierten Namensraums (ZNS3), und
wobei das Verfahren ferner Folgendes umfasst:
Bestimmen eines dritten maximalen UZR-Indexwerts, der dem so verringerten ersten zonierten Namensraum (ZNS1) entspricht, basierend auf der dritten Anfrage;
Bestimmen eines vierten maximalen UZR-Indexwerts, der dem dritten zonierten Namensraum (ZNS3) entspricht, basierend auf der dritten Anfrage; und
Aktualisieren der Zonenmetadatentabelle (1213) der Speichervorrichtung (1200), so dass ein vorheriger UZR-Indexwert des ersten zonierten Namensraums (ZNS1) vor der Neuzuordnungsoperation auf den dritthöchsten UZR-Indexwert und den vierthöchsten UZR-Indexwert geändert wird.

15. Verfahren nach einem der Ansprüche 12 bis 14, ferner umfassend:
nach dem Aktualisieren des dritten Zuordnungsverhältnisses, Empfangen einer vierten Anfrage von der Hostvorrichtung (1100), die eine zweite Benutzeroperation des ersten zonierten Namensraums (ZNS1) angibt, wobei die zweite Benutzeroperation eine Statusübergangsoperation, eine Leseoperation, eine Schreiboperation oder eine Metadatenleseoperation des ersten zonierten Namensraums (ZNS1) angibt; und
Durchführen der zweiten Benutzeroperation basierend auf der vierten Anfrage.

## Revendications

1. Procédé de fonctionnement d'un dispositif de stockage (1200), le procédé comprenant :
l'allocation d'une pluralité de régions de zone unitaire (UZR1 - UZRM), chaque région de zone unitaire (UZR1, UZRM) présentant une taille de zone unitaire, dans lequel chaque région de zone unitaire (UZR1, UZRM) de la pluralité de régions de zone unitaire (UZR1 - UZRM) est mappée à au moins un bloc de mémoire correspondant (BLK) parmi une pluralité de blocs de mémoire dans le dispositif de stockage (1200), et dans lequel chaque région de zone unitaire (UZR1, UZRM) de la pluralité de régions de zone unitaire (UZR1 - UZRM) prend en charge une écriture séquentielle conformément à une norme d'espace de noms zoné, ZNS ;
**caractérisé en ce que** le procédé comprend en outre :
la réception d'une première requête indiquant une opération d'allocation d'un premier espace de noms zoné (ZNS1) conformément à la norme ZNS à partir d'un dispositif hôte (1100) ;
la détermination d'un premier rapport de mappage en divisant une première taille de zone du premier espace de noms zoné (ZNS1) par la taille de zone unitaire, sur la base de la première requête ; et
le stockage du premier rapport de mappage dans une table de métadonnées de zone (1213) du dispositif de stockage (1200).

2. Procédé selon la revendication 1, dans lequel la table de métadonnées de zone (1213) inclut :
une table de taille d'espace de noms (1213a) configurée pour stocker une première valeur d'indice de région de zone unitaire, UZR, maximale correspondant à une dernière région de zone unitaire (UZR8) parmi les régions de zone unitaire (UZR1 - UZR8) correspondant au premier espace de noms zoné (ZNS1) parmi la pluralité de régions de zone unitaire (UZR1 - UZRM) ;
une table de taille de zone (1213b) configurée pour stocker le premier rapport de mappage ; et
une table d'état de zone (1213c) configurée pour stocker un état et un pointeur d'écriture de chacune de la pluralité de régions de zone unitaire (UZR1 - UZRM).

3. Procédé selon la revendication 1 ou 2, dans lequel la taille de zone unitaire correspond à l'un parmi :
un bloc de mémoire (BLK) ;
un premier nombre de blocs de mémoire conformément à une politique de fonctionnement du dispositif de stockage (1200) ; ou
un second nombre de blocs de mémoire déterminé par le dispositif hôte (1100).

4. Procédé selon une quelconque revendication précédente, dans lequel chacune de la pluralité de régions de zone unitaire (UZR1 - UZRM) présente une valeur d'indice UZR correspondante, et
dans lequel le procédé comprend en outre :
la détermination d'une première valeur d'indice UZR maximale du premier espace de noms zoné (ZNS1) sur la base de la première requête, dans lequel la première valeur d'indice UZR maximale correspond à une dernière région de zone unitaire (UZR8) parmi les régions de zone unitaire (UZR1 - UZR8) correspondant au premier espace de noms zoné (ZNS1) parmi la pluralité de régions de zone unitaire (UZR1- UZRM) ; et
le stockage de la première valeur d'indice UZR maximale dans la table de métadonnées de zone (1213) du dispositif de stockage (1200).

5. Procédé selon une quelconque revendication précédente, dans lequel l'opération d'allocation inclut une opération d'allocation d'un deuxième espace de noms zoné (ZNS2) conforme à la norme ZNS, et
dans lequel une dernière région de zone parmi les régions de zone du premier espace de noms zoné (ZNS1) et une première région de zone parmi les régions de zone du deuxième espace de noms zoné (ZNS2) sont logiquement séquentielles.

6. Procédé selon la revendication 5, dans lequel chacune de la pluralité de régions de zone unitaire (UZR1- UZRM) présente une valeur d'indice UZR correspondante, et
dans lequel le procédé comprend en outre :
la détermination d'un deuxième rapport de mappage en divisant une deuxième taille de zone du deuxième espace de noms zoné (ZNS2) par la taille de zone unitaire, sur la base de la première requête ;
le stockage du deuxième rapport de mappage dans la table de métadonnées de zone (1213) du dispositif de stockage (1200) ;
la détermination d'une deuxième valeur d'indice UZR maximale du deuxième espace de noms zoné (ZNS2) sur la base de la première requête, dans lequel la deuxième valeur d'indice UZR maximale correspond à une dernière région de zone unitaire (UZR12) parmi les régions de zone unitaire (UZR9 - UZR12) correspondant au deuxième espace de noms zoné (ZNS2) parmi la pluralité de régions de zone unitaire (UZR1 - UZRM) ; et
le stockage de la deuxième valeur d'indice UZR maximale dans la table de métadonnées de zone (1213) du dispositif de stockage (1200).

7. Procédé selon une quelconque revendication précédente, comprenant en outre :
après le stockage du premier rapport de mappage, la réception d'une deuxième requête indiquant une première opération utilisateur du premier espace de noms zoné (ZNS1) de la part du dispositif hôte (1100), dans lequel la première opération utilisateur indique une opération de transition d'état, une opération de lecture, une opération d'écriture ou une opération de lecture de métadonnées du premier espace de noms zoné (ZNS1) ; et
l'exécution de la première opération utilisateur, sur la base de la deuxième requête.

8. Procédé selon la revendication 7, dans lequel la première opération utilisateur indique l'opération de transition d'état ou l'opération d'écriture d'une région de zone cible parmi les régions de zone du premier espace de noms zoné (ZNS1),
dans lequel l'exécution de la première opération utilisateur sur la base de la deuxième requête inclut :
la mise à jour de la table de métadonnées de zone (1213) de sorte qu'un pointeur d'écriture ou un état de chacune des régions de zone unitaire correspondant à la région de zone cible soit modifié, et
dans lequel l'état est conforme à la norme ZNS.

9. Procédé selon la revendication 7 ou 8, dans lequel la première opération utilisateur indique l'opération de lecture de métadonnées d'une région de zone cible parmi les régions de zone du premier espace de noms zoné (ZNS1), et
dans lequel l'exécution de la première opération utilisateur sur la base de la deuxième requête inclut :
l'obtention de premières métadonnées des régions de zone unitaire correspondant à la région de zone cible parmi la pluralité de régions de zone unitaire de la table de métadonnées de zone (1213) ;
la détermination de secondes métadonnées de la région de zone cible, sur la base des premières métadonnées ; et la fourniture des secondes métadonnées au dispositif hôte (1100).

10. Procédé selon la revendication 9, dans lequel les premières métadonnées incluent des premiers pointeurs d'écriture correspondant respectivement aux régions de zone unitaire correspondant à la région de zone cible,
dans lequel les secondes métadonnées incluent un second pointeur d'écriture de la région de zone cible, et
dans lequel la détermination des secondes métadonnées de la région de zone cible sur la base des premières métadonnées inclut :
la détermination du fait que le second pointeur d'écriture de la région de zone cible est une somme des premiers pointeurs d'écriture des régions de zone unitaire correspondant à la région de zone cible.

11. Procédé selon la revendication 9 ou 10, dans lequel les premières métadonnées incluent des premiers états correspondant respectivement aux régions de zone unitaire correspondant à la région de zone cible, les premiers états étant conformes à la norme ZNS,
dans lequel les secondes métadonnées incluent un second état de la région de zone cible, les seconds états étant conformes à la norme ZNS, et
dans lequel la détermination des secondes métadonnées de la région de zone cible sur la base des premières métadonnées inclut :
la détermination du fait qu'un état ouvert est présent ou non dans les premiers états ; et
la détermination du fait que le second état est l'état ouvert, en réponse à la détermination du fait que l'état ouvert est présent dans les premiers états.

12. Procédé selon une quelconque revendication précédente, comprenant en outre :
après le stockage du premier rapport de mappage, la réception d'une troisième requête indiquant une opération de réallocation du premier espace de noms zoné (ZNS1) conformément à la norme ZNS à partir du dispositif hôte (1100) ;
la détermination d'un troisième rapport de mappage en divisant une troisième taille de zone du premier espace de noms zoné (ZNS1) par la taille de zone unitaire, sur la base de la troisième requête ; et
le mise à jour du troisième rapport de mappage dans la table de métadonnées de zone (1213) du dispositif de stockage (1200) .

13. Procédé selon la revendication 12, dans lequel la mise à jour du troisième rapport de mappage dans la table de métadonnées de zone (1213) du dispositif de stockage (1200) inclut :
la recherche dans la table de métadonnées de zone (1213) du premier rapport de mappage en utilisant une valeur d'indice ZNS correspondant au premier espace de noms zoné (ZNS1) ;
la détermination du fait que le troisième rapport de mappage coïncide ou non avec le premier rapport de mappage ; et
en réponse à la détermination du fait que le troisième rapport de mappage ne coïncide pas avec le premier rapport de mappage, la mise à jour de la table de métadonnées de zone (1213) de sorte que le premier rapport de mappage soit modifié en le troisième rapport de mappage.

14. Procédé selon la revendication 12 ou 13, dans lequel l'opération de réallocation du premier espace de noms zoné (ZNS1) inclut une opération de diminution du premier espace de noms zoné (ZNS1) et une opération d'ajout d'un troisième espace de noms zoné (ZNS3),
dans lequel une première taille logique du premier espace de noms zoné (ZNS1) avant l'opération de réallocation est identique à la somme d'une deuxième taille logique du premier espace de noms zoné (ZNS1) ainsi réduite et d'une troisième taille logique du troisième espace de noms zoné (ZNS3), et
dans lequel le procédé comprend en outre :
la détermination d'une troisième valeur d'indice UZR maximale correspondant au premier espace de noms zoné (ZNS1) ainsi diminué, sur la base de la troisième requête ;
la détermination d'une quatrième valeur d'indice UZR maximale correspondant au troisième espace de noms zoné (ZNS3), sur la base de la troisième requête ; et
la mise à jour de la table de métadonnées de zone (1213) du dispositif de stockage (1200) de sorte qu'une valeur d'indice UZR précédente du premier espace de noms zoné (ZNS1) avant l'opération de réallocation soit modifiée en la troisième valeur d'indice UZR maximale et la quatrième valeur d'indice UZR maximale.

15. Procédé selon l'une quelconque des revendications 12 à 14, comprenant en outre :
après la mise à jour du troisième rapport de mappage, la réception d'une quatrième requête indiquant une seconde opération utilisateur du premier espace de noms zoné (ZNS1) de la part du dispositif hôte (1100), dans lequel la seconde opération utilisateur indique une opération de transition d'état, une opération de lecture, une opération d'écriture ou une opération de lecture de métadonnées du premier espace de noms zoné (ZNS1) ; et
l'exécution de la seconde opération utilisateur, sur la base de la quatrième requête.
